(19) **Europäisches Patentamt / European Patent Office / Office européen des brevets**

(11) **EP 4 346 270 A1**

(12) # EUROPEAN PATENT APPLICATION
published in accordance with Art. 153(4) EPC

(43) Date of publication:
**03.04.2024 Bulletin 2024/14**

(21) Application number: **22827597.0**

(22) Date of filing: **22.06.2022**

(51) International Patent Classification (IPC):
**H04W 24/08** (2009.01)

(52) Cooperative Patent Classification (CPC):
**H04W 24/08**

(86) International application number:
**PCT/CN2022/100350**

(87) International publication number:
**WO 2022/268104 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 CN 202110691276**

(71) Applicant: **Huawei Technologies Co., Ltd. Longgang
Shenzhen, Guangdong 518129 (CN)**

(72) Inventors:
• **ZHOU, Baojian
  Shenzhen, Guangdong 518129 (CN)**

• **LUO, Jiajin
  Shenzhen, Guangdong 518129 (CN)**
• **LYU, Yongxia
  Shenzhen, Guangdong 518129 (CN)**
• **LIU, Chenchen
  Shenzhen, Guangdong 518129 (CN)**
• **PENG, Xiaohui
  Shenzhen, Guangdong 518129 (CN)**
• **HOU, Xiaoyue
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) ## WIRELESS PERCEPTION METHOD AND DEVICE

(57)    This application provides a wireless sensing method and an apparatus. The method includes: A first communication apparatus receives a first signal and a second signal based on a first transmission parameter set and a second transmission parameter set respectively, and performs sensing based on the first signal and the second signal, to obtain a sensing result. The first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision. Therefore, the sensing result obtained through sensing based on the first signal and the second signal can meet a sensing requirement, thereby flexibly allocating a signal transmission resource based on the sensing requirement.

8/15

Wireless sensing method 200

First communication apparatus

S210. Determine a first transmission parameter set and a second transmission parameter set

Second communication apparatus

S210. Determine a first transmission parameter set and a second transmission parameter set

S220. Transmit a first signal and a second signal based on the first transmission parameter set and the second transmission parameter set respectively

S230. Perform sensing based on the first signal and the second signal to obtain a sensing result

FIG. 10

**Description**

This application claims priority to Chinese Patent Application No. 202110691276.9, filed with the China National Intellectual Property Administration on June 22, 2021 and entitled "WIRELESS SENSING METHOD AND APPARATUS", which is incorporated herein by reference in its entirety.

**TECHNICAL FIELD**

This application relates to the field of communication technologies, and in particular, to a wireless sensing method and an apparatus.

**BACKGROUND**

In a wireless sensing technology, a change of a wireless signal in a propagation process is analyzed to obtain characteristics of signal propagation space, to implement scenario sensing, for example, ranging, speed testing, and positioning. A main function of a wireless communication system is to exchange information between a transmitter and a receiver. A basic principle of the wireless communication system is that a specific waveform signal transmitted by the transmitter is received by the receiver through a radio channel, and the signal transmitted by the transmitter is demodulated after being signal-processed. The wireless communication and the wireless sensing technology are combined to sense a surrounding environment while implementing communication.

New radio (new radio, NR) defines reference signals that can be used for ranging and positioning, such as a positioning reference signal (positioning reference signal, PRS) and a channel sounding reference signal (sounding reference signal, SRS). A signal transmission delay is estimated by calculating a value of correlation between an original signal and a received signal. Existing signal designs such as the PRS and the SRS have problems such as inflexible resource configuration.

**SUMMARY**

Embodiments of this application provide a wireless sensing method and an apparatus, which can alleviate a problem of inflexible resource allocation while meeting a sensing requirement.

According to a first aspect, an embodiment of this application provides a wireless sensing method. The method includes: A first communication apparatus receives, based on a first transmission parameter set and a second transmission parameter set respectively, a first signal and a second signal that are sent by a second communication apparatus, where the first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision; and the first communication apparatus performs sensing based on the first signal and the second signal, to obtain a sensing result.

In the foregoing method, the at least one parameter in the first transmission parameter set corresponding to the first signal meets the first condition related to the targeted ranging coverage, and the at least one parameter in the second transmission parameter set corresponding to the second signal meets the second condition related to the targeted ranging precision. Different transmission parameter sets may be used for different sensing requirements, to implement flexible configuration of transmission resources.

In a possible implementation, the performing sensing based on the first signal and the second signal, to obtain a sensing result includes: performing sensing based on the first signal to obtain a first result, performing sensing based on the second signal to obtain a second result, and determining the sensing result based on the first result and the second result.

Optionally, the sensing result may be determined based on a difference between the first result and the second result. For example, differences between a measurement value of the first result and a plurality of measurement values of the second result are separately calculated to obtain a plurality of differences, and a measurement value, corresponding to a difference whose absolute value is minimum, of the second result is selected as the sensing result based on the plurality of differences.

In the foregoing possible implementation, the first result corresponding to the first signal may meet the targeted ranging coverage. This can ensure that there is no ranging ambiguity in a large coverage. The second result corresponding to the second signal may meet the targeted ranging precision, but there may be ranging ambiguity. In other words, there may be a plurality of measurement values for the second result. A measurement value closest to an actual value may be selected as the sensing result from the plurality of measurement values of the second result based on the first result, so that ranging precision can be improved while ensuring that there is no ranging ambiguity.

In a possible implementation, the first communication apparatus receives first configuration information. The first configuration information indicates a result of signal configuration performed based on the first transmission parameter set and the second transmission parameter set. In this implementation, the first communication apparatus successfully receives the first signal and the second signal based on a configuration result.

In a possible implementation, the first communication apparatus receives a first configuration request, performs signal configuration in response to the first configuration request, and sends second configuration information. The first configuration request includes information about the first transmission parameter set and information about the second transmission parameter set. The second configuration information indicates a result of signal configuration performed based on the first transmission parameter set and the second transmission parameter set. In this implementation, the first signal and the second signal are successfully transmitted and received between the second communication apparatus and the first communication apparatus based on the result of signal configuration.

In a possible implementation, the first communication apparatus sends a second configuration request, so that the second communication apparatus performs signal configuration in response to the second configuration request; and receives third configuration information sent by the second communication apparatus. The second configuration request includes information about the first transmission parameter set and information about the second transmission parameter set. The third configuration information indicates a result of signal configuration performed based on the first transmission parameter set and the second transmission parameter set. In this implementation, the first communication apparatus successfully receives the first signal and the second signal based on the configuration result indicated by the third configuration information.

In a possible implementation, the first communication apparatus determines the first transmission parameter set and the second transmission parameter set, performs signal configuration based on the first transmission parameter set and the second transmission parameter set, and sends fourth configuration information, where the fourth configuration information indicates a result of signal configuration performed based on the first transmission parameter set and the second transmission parameter set. In this implementation, the first signal and the second signal are successfully transmitted and received between the second communication apparatus and the first communication apparatus based on the result of signal configuration.

According to a second aspect, an embodiment of this application provides a wireless sensing method. The method includes: A second communication apparatus obtains a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision; and the second communication apparatus sends the first signal and the second signal to a first communication apparatus based on the first transmission parameter set and the second transmission parameter set, where the first signal and the second signal are used for sensing.

In a possible implementation, the second communication apparatus sends first configuration information, where the first configuration information indicates a result of signal configuration performed based on the first transmission parameter set and the second transmission parameter set. In this implementation, the first signal and the second signal are successfully transmitted and received between the second communication apparatus and the first communication apparatus based on the result of signal configuration.

In a possible implementation, the second communication apparatus sends a first configuration request, so that the first communication apparatus performs signal configuration in response to the first configuration request; and receives second configuration information sent by the first communication apparatus. The first configuration request includes information about the first transmission parameter set and information about the second transmission parameter set. The second configuration information indicates a result of signal configuration performed based on the first transmission parameter set and the second transmission parameter set. In this implementation, the first signal and the second signal are successfully transmitted and received between the second communication apparatus and the first communication apparatus based on the result of signal configuration.

In a possible implementation, the second communication apparatus receives a second configuration request, performs signal configuration in response to the second configuration request, and sends third configuration information. The second configuration request includes information about the first transmission parameter set and information about the second transmission parameter set. The third configuration information indicates a result of signal configuration performed based on the first transmission parameter set and the second transmission parameter set. In this implementation, the first signal and the second signal are successfully transmitted and received between the second communication apparatus and the first communication apparatus based on the result of signal configuration.

In a possible implementation, the second communication apparatus receives fourth configuration information, where the fourth configuration information indicates a result of signal configuration performed based on the first transmission parameter set and the second transmission parameter set. In this implementation, the first signal and the second signal are successfully transmitted and received between the second communication apparatus and the first communication apparatus based on the result of signal configuration.

According to a third aspect, an embodiment of this application further provides a communication apparatus. The communication apparatus may be a first communication apparatus applied to the first aspect. The communication apparatus may be a terminal device or a network device, may be an apparatus (for example, a chip, a chip system, or a circuit) in the terminal device or the network device, or may be an apparatus that can be matched with the terminal device or the network device.

In a possible implementation, the communication apparatus may include modules or units that are in one-to-one correspondence with the methods/operations/steps/actions described in the first aspect. The modules or units may be implemented by a hardware circuit, software, or a combination of a hardware circuit and software.

In a possible implementation, the communication apparatus may include a processing unit and a transceiver unit. The processing unit is configured to invoke the transceiver unit to perform receiving and/or sending functions. For example, the transceiver unit is configured to receive, based on a first transmission parameter set and a second transmission parameter set respectively, a first signal and a second signal that are sent by a second communication apparatus. The processing unit is configured to perform sensing based on the first signal and the second signal, to obtain a sensing result. The first transmission parameter set corresponds to the first signal, the first transmission parameter set includes a first subcarrier quantity corresponding to the first signal, the second transmission parameter set corresponds to the second signal, the second transmission parameter set includes a second subcarrier quantity corresponding to the second signal, and the second subcarrier quantity is less than the first subcarrier quantity. The first transmission parameter set is determined based on a targeted ranging coverage, and the second transmission parameter set is determined based on targeted sensing precision.

In a possible implementation, the processing unit is specifically configured to: perform sensing based on the first signal to obtain a first result, perform sensing based on the second signal to obtain a second result, and determine the sensing result based on the first result and the second result.

Optionally, the transceiver unit is further configured to receive first configuration information. The first configuration information indicates a result of signal configuration performed based on the first transmission parameter set and the second transmission parameter set.

Optionally, the transceiver unit is further configured to receive a first configuration request. The processing unit is further configured to perform signal configuration in response to the first configuration request. The transceiver unit is further configured to send second configuration information. The first configuration request includes information about the first transmission parameter set and information about the second transmission parameter set. The second configuration information indicates a result of signal configuration performed based on the first transmission parameter set and the second transmission parameter set.

Optionally, the transceiver unit is further configured to: send a second configuration request, so that the second communication apparatus performs signal configuration in response to the second configuration request; and receive third configuration information sent by the second communication apparatus. The second configuration request includes information about the first transmission parameter set and information about the second transmission parameter set. The third configuration information indicates a result of signal configuration performed based on the first transmission parameter set and the second transmission parameter set.

Optionally, the transceiver unit is configured to send fourth configuration information, where the fourth configuration information indicates a result of signal configuration performed based on the first transmission parameter set and the second transmission parameter set.

In a possible implementation, the processing unit is a processor, and the transceiver unit is a transceiver.

In another possible implementation, the communication apparatus may include a receiving unit and a sensing unit. The receiving unit is configured to receive, based on a first transmission parameter set and a second transmission parameter set respectively, a first signal and a second signal that are sent by a second communication apparatus. The sensing unit is configured to perform sensing based on the first signal and the second signal, to obtain a sensing result. The first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision.

In a possible implementation, the sensing unit is specifically configured to: perform sensing based on the first signal to obtain a first result, perform sensing based on the second signal to obtain a second result, and determine the sensing result based on the first result and the second result.

Optionally, the receiving unit is further configured to receive first configuration information. The first configuration information indicates a result of signal configuration performed based on the first transmission parameter set and the second transmission parameter set.

Optionally, the communication apparatus further includes a sending unit and a configuration unit. The receiving unit is further configured to receive a first configuration request. The configuration unit is configured to perform signal configuration in response to the first configuration request. The sending unit is configured to send second configuration information. The first configuration request includes information about the first transmission parameter set and information about the second transmission parameter set. The second configuration information indicates a result of signal configuration performed based on the first transmission parameter set and the second transmission parameter set.

Optionally, the communication apparatus further includes a sending unit. The sending unit is configured to send a second configuration request, so that the second communication apparatus performs signal configuration in response to the second configuration request. The receiving unit is further configured to receive third configuration information sent by the second communication apparatus. The second configuration request includes information about the first transmission parameter set and information about the second transmission parameter set. The third configuration information indicates a result of signal configuration performed based on the first transmission parameter set and the second transmission parameter set.

Optionally, the communication apparatus further includes a sending unit. The sending unit is configured to send fourth configuration information, where the fourth configuration information indicates a result of signal configuration performed based on the first transmission parameter set and the second transmission parameter set.

For beneficial effects of the communication apparatus in the third aspect and the possible implementations of the third aspect, refer to the first aspect and the possible implementations of the first aspect. Details are not described herein again.

According to a fourth aspect, an embodiment of this application further provides a communication apparatus. The communication apparatus may be a second communication apparatus applied to the second aspect. The communication apparatus may be a terminal device or a network device, may be an apparatus (for example, a chip, a chip system, or a circuit) in the terminal device or the network device, or may be an apparatus that can be matched with the terminal device or the network device.

In a possible implementation, the communication apparatus may include modules or units that are in one-to-one correspondence with the methods/operations/steps/actions described in the first aspect. The modules or units may be implemented by a hardware circuit, software, or a combination of a hardware circuit and software.

In a possible implementation, the communication apparatus may include a processing unit and a transceiver unit. The processing unit is configured to invoke the transceiver unit to perform receiving and/or sending functions. For example, the processing unit is configured to obtain a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The transceiver unit is configured to send the first signal and the second signal based on the first transmission parameter set and the second transmission parameter set, where the first signal and the second signal are used for sensing.

Optionally, the transceiver unit is further configured to send first configuration information, where the first configuration information indicates a result of signal configuration performed based on the first transmission parameter set and the second transmission parameter set.

Optionally, the transceiver unit is further configured to: send a first configuration request, so that the first communication apparatus performs signal configuration in response to the first configuration request; and receive second configuration information sent by the first communication apparatus. The first configuration request includes information about the first transmission parameter set and information about the second transmission parameter set. The second configuration information indicates a result of signal configuration performed based on the first transmission parameter set and the second transmission parameter set.

Optionally, the transceiver unit is further configured to receive a second configuration request, the processing unit is further configured to perform signal configuration in response to the second configuration request, and the transceiver unit is further configured to send third configuration information. The second configuration request includes information about the first transmission parameter set and information about the second transmission parameter set. The third configuration information indicates a result of signal configuration performed based on the first transmission parameter set and the second transmission parameter set.

Optionally, the transceiver unit is further configured to receive fourth configuration information, where the fourth configuration information indicates a result of signal configuration performed based on the first transmission parameter set and the second transmission parameter set.

In a possible implementation, the processing unit is a processor, and the transceiver unit is a transceiver.

In another possible implementation, the communication apparatus includes an obtaining unit and a sending unit. The obtaining unit is configured to obtain a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The sending unit is configured to send the first signal and the second signal based on the first transmission parameter set and the second transmission parameter set, where the first signal and the second signal are used for sensing.

Optionally, the sending unit is further configured to send first configuration information, where the first configuration information indicates a result of signal configuration performed based on the first transmission parameter set and the second transmission parameter set.

Optionally, the sending unit is further configured to: send a first configuration request, so that the first communication apparatus performs signal configuration in response to the first configuration request. The communication apparatus further includes a receiving unit, configured to receive second configuration information sent by the first communication apparatus. The first configuration request includes information about the first transmission parameter set and information about the second transmission parameter set. The second configuration information indicates a result of signal configuration performed based on the first transmission parameter set and the second transmission parameter set.

Optionally, the communication apparatus further includes a receiving unit and a configuration unit. The receiving unit is configured to receive a second configuration request, the configuration unit is configured to perform signal configuration in response to the second configuration request, and the sending unit is further configured to send third configuration information. The second configuration request includes information about the first transmission parameter set and information about the second transmission parameter set. The third configuration information indicates a result of signal configuration performed based on the first transmission parameter set and the second transmission parameter set.

Optionally, the communication apparatus further includes a receiving unit, configured to receive fourth configuration information, where the fourth configuration information indicates a result of signal configuration performed based on the first transmission parameter set and the second transmission parameter set.

For beneficial effects of the communication apparatus in the fourth aspect and the possible implementations of the fourth aspect, refer to the second aspect and the possible implementations of the second aspect. Details are not described herein again.

According to a fifth aspect, an embodiment of this application further provides a first communication apparatus, including a logic circuit and an input/output interface. The input/output interface is configured to receive a first signal and a second signal, the first signal corresponds to a first transmission parameter set, and the second signal corresponds to a second transmission parameter set. The logic circuit is configured to perform sensing based on the first signal and the second signal, to obtain a sensing result. The first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision.

In a possible implementation, the logic circuit is specifically configured to: perform sensing based on the first signal to obtain a first result, perform sensing based on the second signal to obtain a second result, and determine the sensing result based on the first result and the second result.

Optionally, the input/output interface is further configured to receive first configuration information. The first configuration information indicates a result of signal configuration performed based on the first transmission parameter set and the second transmission parameter set.

Optionally, the input/output interface is further configured to receive a first configuration request; the logic circuit is further configured to perform signal configuration in response to the first configuration request; and the input/output interface is further configured to output second configuration information. The first configuration request includes information about the first transmission parameter set and information about the second transmission parameter set. The second configuration information indicates a result of signal configuration performed based on the first transmission parameter set and the second transmission parameter set.

Optionally, the input/output interface is further configured to: output a second configuration request, so that the second communication apparatus performs signal configuration in response to the second configuration request; and receive third configuration information sent by the second communication apparatus. The second configuration request includes information about the first transmission parameter set and information about the second transmission parameter set. The third configuration information indicates a result of signal configuration performed based on the first transmission parameter set and the second transmission parameter set.

Optionally, the input/output interface is further configured to output fourth configuration information, where the fourth configuration information indicates a result of signal configuration performed based on the first transmission parameter set and the second transmission parameter set.

For beneficial effects of the communication apparatus in the fifth aspect and the possible implementations of the fifth aspect, refer to the first aspect and the possible implementations of the first aspect. Details are not described herein again.

According to a sixth aspect, an embodiment of this application further provides a second communication apparatus, including a logic circuit and an input/output interface. The logic circuit is configured to obtain a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The input/output interface is configured to output the first signal and the second signal based on the first transmission parameter set and the second transmission parameter set, where the first signal and the second signal are used for sensing.

Optionally, the input/output interface is further configured to output first configuration information, where the first configuration information indicates a result of signal configuration performed based on the first transmission parameter set and the second transmission parameter set.

Optionally, the input/output unit is further configured to: output a first configuration request, so that a first communication apparatus performs signal configuration in response to the first configuration request; and receive second configuration information sent by the first communication apparatus. The first configuration request includes information about the first transmission parameter set and information about the second transmission parameter set. The second configuration information indicates a result of signal configuration performed based on the first transmission parameter set and the second transmission parameter set.

Optionally, the input/output interface is further configured to receive a second configuration request, the logic circuit is further configured to perform signal configuration in response to the second configuration request, and the input/output unit is further configured to output third configuration information. The second configuration request includes information about the first transmission parameter set and information about the second transmission parameter set. The third configuration information indicates a result of signal configuration performed based on the first transmission parameter set and the second transmission parameter set.

Optionally, the input/output interface is further configured to receive fourth configuration information, where the fourth configuration information indicates a result of signal configuration performed based on the first transmission parameter set and the second transmission parameter set.

For beneficial effects of the communication apparatus in the sixth aspect and the possible implementations of the sixth aspect, refer to the second aspect and the possible implementations of the second aspect. Details are not described herein again.

According to a seventh aspect, an embodiment of this application further provides a first communication apparatus, including a processor, configured to perform the following method:
receiving a first signal and a second signal, where the first signal corresponds to a first transmission parameter set, and the second signal corresponds to a second transmission parameter set; and performing sensing based on the first signal and the second signal, to obtain a sensing result, where the first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision.

In a possible implementation, the processor is specifically configured to: perform sensing based on the first signal to obtain a first result, perform sensing based on the second signal to obtain a second result, and determine the sensing result based on the first result and the second result.

Optionally, the processor is further configured to receive first configuration information. The first configuration information indicates a result of signal configuration performed based on the first transmission parameter set and the second transmission parameter set.

Optionally, the processor is further configured to: receive a first configuration request; perform signal configuration in response to the first configuration request; and output second configuration information. The first configuration request includes information about the first transmission parameter set and information about the second transmission parameter set. The second configuration information indicates a result of signal configuration performed based on the first transmission parameter set and the second transmission parameter set.

Optionally, the processor is further configured to: output a second configuration request, so that the second communication apparatus performs signal configuration in response to the second configuration request; and receive third configuration information sent by the second communication apparatus. The second configuration request includes information about the first transmission parameter set and information about the second transmission parameter set. The third configuration information indicates a result of signal configuration performed based on the first transmission parameter set and the second transmission parameter set.

Optionally, the processor is further configured to output fourth configuration information, where the fourth configuration information indicates a result of signal configuration performed based on the first transmission parameter set and the second transmission parameter set.

In a possible implementation, the processor executes instructions stored in a memory, to implement the method performed by the processor in the seventh aspect. Optionally, the communication apparatus further includes the memory storing the instructions.

According to an eighth aspect, an embodiment of this application further provides a second communication apparatus, including a processor, configured to perform the following method:

obtaining a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision; and outputting the first signal and the second signal based on the first transmission parameter set and the second transmission parameter set, where the first signal and the second signal are used for sensing.

Optionally, the processor is further configured to output first configuration information, where the first configuration information indicates a result of signal configuration performed based on the first transmission parameter set and the second transmission parameter set.

Optionally, the processor is further configured to: output a first configuration request, so that a first communication apparatus performs signal configuration in response to the first configuration request; and receive second configuration information sent by the first communication apparatus. The first configuration request includes information about the first transmission parameter set and information about the second transmission parameter set. The second configuration information indicates a result of signal configuration performed based on the first transmission parameter set and the second transmission parameter set.

Optionally, the processor is further configured to: receive a second configuration request, perform signal configuration in response to the second configuration request, and output third configuration information. The second configuration request includes information about the first transmission parameter set and information about the second transmission parameter set. The third configuration information indicates a result of signal configuration performed based on the first transmission parameter set and the second transmission parameter set.

Optionally, the processor is further configured to receive fourth configuration information, where the fourth configuration information indicates a result of signal configuration performed based on the first transmission parameter set and the second transmission parameter set.

With reference to the methods or the apparatuses in the first to the eighth aspects, one or more of the following possible implementations are further included:

In a possible implementation, the first transmission parameter set further includes at least one of the following: a first subcarrier quantity $M_1$ corresponding to the first signal, a first subcarrier spacing quantity $K_1$ corresponding to the first signal, a first orthogonal frequency division multiplexing OFDM symbol quantity $L_1$ corresponding to the first signal, and first sample energy $E_1$ corresponding to the first signal, where $K_1$ and $L_1$ are positive integers, and $E_1$ is greater than or equal to 0. The second transmission parameter set further includes at least one of the following: a second subcarrier quantity $M_2$ corresponding to the second signal, a second subcarrier spacing quantity $K_2$ corresponding to the second signal, a second orthogonal frequency division multiplexing OFDM symbol quantity $L_2$ corresponding to the first signal, and second sample energy $E_2$ corresponding to the first signal, where $K_2$ and $L_2$ are positive integers, and $E_2$ is greater than or equal to 0.

A subcarrier quantity, for example, $M_1$ or $M_z$, corresponding to a signal indicates a quantity of subcarriers that carry the signal. A subcarrier spacing quantity, for example, $K_1$ or $K_2$, of a signal indicates a density of the signal in frequency domain. An OFDM symbol quantity, for example, $L_1$ or $L_2$, of a signal indicates a time domain resource occupied by the signal, that is, a length of time for which the signal continues in time domain. A sample energy, for example, $E_1$ or $E_2$, of a signal indicates a mean of squares of amplitudes of resource elements constituting the signal. The foregoing transmission parameters of the signal may affect accuracy of a sensing result of signal-based sensing, and is further related to transmission resources that are in time domain, frequency domain, and power domain and that are occupied when the signal is transmitted. A sensing requirement can be met and resource utilization can be improved by selecting an appropriate transmission parameter.

In a possible implementation, the first transmission parameter set includes the first subcarrier spacing quantity $K_1$ corresponding to the first signal.

The first subcarrier spacing quantity $K_1$ is determined based on the targeted ranging coverage. During phase ranging, a maximum unambiguous range is determined by a frequency difference between two subcarriers. The frequency difference between the two subcarriers may be represented by using a subcarrier spacing quantity. Therefore, determining the first subcarrier spacing quantity $K_1$ corresponding to the first signal based on the targeted ranging coverage can ensure that for the targeted ranging coverage, there is no range ambiguity in a ranging result that is based on the first signal.

In a possible implementation, the at least one parameter in the first transmission parameter set meets the first condition, and the first condition is:

$$D \leq \frac{c}{\gamma K_1 \Delta f}.$$

D is the targeted ranging coverage, $K_1$ is the first subcarrier spacing quantity, $\Delta f$ is a subcarrier spacing corresponding to the first signal, $c$ is a signal propagation speed, that is, a propagation speed of a signal, and $\gamma$ is a preset value greater than 0.

In different ranging scenarios, the preset value $\gamma$ is different. In a passive targeted ranging scenario, $\gamma$ is a value greater than 1 and less than or equal to 2, where $\gamma$ may be equal to 2 in a self-sending and self-receiving scenario, and $\gamma$ may be equal to 1 in an active targeted ranging scenario.

In the first condition, D is a predefined parameter, the subcarrier spacing (subcarrier spacing, SCS) $\Delta f$ is a predefined system parameter, the signal propagation speed c is a known parameter, and $\gamma$ is a parameter that may be determined based on a ranging scenario. Therefore, the subcarrier spacing quantity $K_1$ of the first signal may be determined based on these parameters.

In a possible implementation, a value of the first subcarrier spacing quantity $K_1$ is a maximum integer that meets the first condition. A larger subcarrier spacing quantity of the first signal indicates a lower density of subcarriers carrying the first signal, and more remaining frequency domain resources that can be used. In this possible implementation, frequency domain resource utilization is improved while the targeted ranging coverage is met.

In a possible implementation, the first transmission parameter set includes a first subcarrier quantity $M_1$ corresponding to the first signal, a first orthogonal frequency division multiplexing OFDM symbol quantity $L_1$ corresponding to the first signal, and first sample energy $E_1$ corresponding to the first signal. The first subcarrier quantity $M_1$, the first OFDM symbol quantity $L_1$, and the first sample energy $E_1$ meet a third condition, where the third condition is related to a maximum unambiguous range of the second signal. The third condition may enable precision corresponding to the first signal to meet unambiguous ranging that is based on the second signal.

In a possible implementation, the first subcarrier quantity $M_1$, the first OFDM symbol quantity $L_1$, and the first sample energy $E_1$ are determined based on a noise power spectral density (noise power spectral density) of the first communication apparatus and a path loss from the second communication apparatus to the first communication apparatus. In phase ranging, ranging precision is related to a frequency of a radio frequency signal and a signal-to-noise ratio, where an equivalent signal-to-noise ratio of the signal is determined based on a subcarrier quantity, an OFDM symbol quantity, and sample energy of the signal, a noise power spectral density of a receiver (the first communication apparatus), and a path loss from a transmitter transmitter to the receiver . In this possible implementation, with a known ranging precision requirement, the first subcarrier quantity, the first OFDM symbol quantity $L_1$, and the first sample energy $E_1$ may be determined based on the noise power spectral density and the path loss, so that ranging based on the first signal meets the ranging precision requirement.

In a possible implementation, a parameter in the first transmission parameter set meets a third condition, and the third condition is:

$$\frac{\beta_1 c}{B_{RMS}\sqrt{SNR_1}} \leq c/f_c.$$

$B_{RMS}$ is root mean square bandwidth of the first signal, $SNR_1$ is an equivalent signal-to-noise ratio of the first signal, $f_c$ is a radio frequency carrier center frequency, $c$ is the signal propagation speed, and $\beta_1$ is a first correction parameter.

$SNR_1$ is determined based on the subcarrier quantity $M_1$ corresponding to the first signal, the OFDM symbol quantity $L_1$ corresponding to the first signal, the sample energy $E_1$ corresponding to the first signal, the noise power spectral density of the first communication apparatus, and the path loss from the second communication apparatus to the first communication apparatus.

In the foregoing third condition, $\frac{\beta_1 c}{B_{RMS}\sqrt{SNR_1}}$ represents ranging precision corresponding to the first signal, and $c/f_c$ represents a wavelength of the second signal. Herein, it is assumed that the ranging based on the second signal is single-carrier phase ranging, and the wavelength of the second signal is the maximum unambiguous range of the second signal. This application does not limit the single-carrier phase ranging to be used for the second signal. If ranging for the second signal is multi-carrier differential phase ranging, $c/f_c$ needs to be replaced with an equivalent wavelength of a multi-carrier signal. The third condition may satisfy that ranging precision based on the first signal meets unambiguous ranging that is based on the second signal.

In a possible implementation, the second transmission parameter set includes a second subcarrier quantity $M_2$ corresponding to the second signal, a second orthogonal frequency division multiplexing OFDM symbol quantity $L_2$ corresponding to the second signal, and second sample energy $L_2$ corresponding to the second signal. The second subcarrier quantity $M_2$, the second OFDM symbol quantity $L_2$, and the second sample energy $E_2$ meet the second condition. The second condition may enable ranging that is based on the second signal to meet the targeted ranging precision.

In a possible implementation, the second subcarrier quantity $M_2$, the second OFDM symbol quantity $L_2$, and the second sample energy $E_2$ are determined based on the targeted sensing precision, the noise power spectral density of the first communication apparatus and the path loss from the second communication apparatus to the first communication apparatus. As described above, in phase ranging, ranging precision is related to a frequency of a radio frequency signal and a signal-to-noise ratio, where an equivalent signal-to-noise ratio of the signal is determined based on a subcarrier quantity, an OFDM symbol quantity, and sample energy of the signal, a noise power spectral density of a receiver (the first communication apparatus), and a path loss from a transmitter transmitter to the receiver. In this possible implementation, when the targeted ranging precision is known, the second subcarrier quantity $M_1$, the second OFDM symbol quantity $L_2$, and the second sample energy $E_2$ may be determined based on the noise power spectral density and the path loss, so that the ranging based on the second signal meets the targeted ranging precision requirement.

In a possible implementation, a parameter in the second transmission parameter set meets the second condition, and the second condition is:

$$\delta \geq \frac{\beta_2 c}{f_c \sqrt{SNR_2}}.$$

$\delta$ is the targeted sensing precision, $SNR_2$ is the equivalent signal-to-noise ratio of the second signal, $f_c$ is the radio frequency carrier center frequency, c is the signal propagation speed, and $\beta_2$ is a second correction parameter; and $SNR_2$ is determined based on the second subcarrier quantity $M_2$, the second OFDM symbol quantity $L_2$, the second sample energy $E_2$, the noise power spectral density of the first communication apparatus, and the path loss from the second communication apparatus to the first communication apparatus.

The second subcarrier quantity $M_1$, the second OFDM symbol quantity $L_2$, and the second sample energy $E_2$ that are determined based on the second condition may enable the ranging precision that is based on the second signal meets the targeted ranging precision.

In a possible implementation, the second subcarrier quantity $M_2$ corresponding to the second signal is less than the first subcarrier quantity $M_1$ corresponding to the first signal. In other words, fewer subcarriers are for carrying the second signal. Therefore, resource overheads during continuous ranging can be reduced, and resource utilization can be improved.

In a possible implementation, the second subcarrier spacing quantity $K_2$ corresponding to the second signal is less than the first subcarrier spacing quantity $K_1$ corresponding to the first signal, that is, a subcarrier density corresponding to the second signal is greater than a subcarrier density corresponding to the first signal. Therefore, resource overheads during continuous ranging can be reduced.

In a possible implementation, the second OFDM symbol quantity $L_2$ corresponding to the second signal is greater than or equal to the first OFDM symbol quantity $L_1$ corresponding to the first signal. Time duration of the second signal in time domain is longer than time duration of the first signal in time domain, which is conducive to continuous ranging on a target.

In a possible implementation, the second sample energy $E_2$ corresponding to the second signal is less than or equal to the first sample energy $E_1$ corresponding to the first signal. Using lower sample energy (low power) for the second signal can reduce resource overheads during continuous ranging.

In a possible implementation, the first signal and/or the second signal are/is phase continuous in adjacent OFDM symbols on a same subcarrier. When a signal on a same subcarrier is phase continuous in adjacent OFDM symbols, it can be ensured that phase detection precision is high, and signal processing complexity of the receiver is low.

In a possible implementation, the first signal and/or the second signal are/is signals obtained after phase compensation. Specifically, phase compensation is performed on a phase value of a resource element RE corresponding to an $l^{th}$ OFDM symbol on a same subcarrier of the first signal and/or the second signal based on a phase value of a resource element RE corresponding to an $(l+1)^{th}$ OFDM symbol adjacent to the $l^{th}$ OFDM symbol; or phase compensation is performed on a phase value of a resource element RE corresponding to an $l+1^{th}$ OFDM symbol on a same subcarrier of the first signal and/or the second signal based on a phase value of a resource element RE corresponding to the $l^{th}$ OFDM symbol adjacent to the $l+1^{th}$ OFDM symbol.

In this possible implementation, phase compensation has been performed on the first signal and/or the second signal received by the first communication apparatus, so that processing complexity of phase ranging based on the first signal and/or the second signal is low, and ranging precision is high.

Optionally, the first communication apparatus sends a first phase compensation indication to the second communication apparatus, so that the second communication apparatus performs phase compensation on the first signal and/or the second signal in response to the first phase compensation indication.

In a possible implementation, a baseband frequency index i of a subcarrier occupied by the first signal and/or the second signal meets the following fourth condition:

$$i = \frac{n}{\Delta f \cdot T_{CP}}.$$

$\Delta f$ is the subcarrier spacing, $T_{CP}$ is an OFDM cyclic prefix length, and n is an integer. Optionally, for a selected subcarrier with a specific baseband frequency domain index, values of a plurality of consecutive REs corresponding to the first signal and/or the second signal at a frequency domain location of a same subcarrier are the same.

A time domain waveform corresponding to the subcarrier whose baseband frequency index meets the fourth condition may be phase continuous in adjacent OFDM symbols.

According to a ninth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to the first aspect and the possible implementations of the first aspect.

In a possible implementation, the processor and the memory are integrated together.

In another possible implementation, the memory is located outside the communication apparatus.

The communication apparatus further includes a communication interface. The communication interface is configured for communication between the communication apparatus and another device, for example, data and/or signal sending or receiving. For example, the communication interface may be a transceiver, a circuit, a bus, a module, or another type of communication interface.

According to a tenth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to the second aspect and the possible implementations of the second aspect.

In a possible implementation, the processor and the memory are integrated together.

In another possible implementation, the memory is located outside the communication apparatus.

The communication apparatus further includes a communication interface. The communication interface is configured for communication between the communication apparatus and another device, for example, data and/or signal sending or receiving. For example, the communication interface may be a transceiver, a circuit, a bus, a module, or another type of communication interface.

According to an eleventh aspect, an embodiment of this application further provides a first communication apparatus, configured to perform the method according to the first aspect and the possible implementations of the first aspect.

According to a twelfth aspect, an embodiment of this application further provides a second communication apparatus, configured to perform the method according to the second aspect and the possible implementations of the second aspect.

According to a thirteenth aspect, an embodiment of this application further provides a computer-readable storage medium. The computer-readable storage medium stores a computer program (or computer-executable instructions), and the computer program (or the computer-executable instructions) is executed by a processor, so that some or all steps of the method according to any one of the first aspect, the second aspect, or the possible implementations of the first aspect or the second aspect are performed.

According to a fourteenth aspect, an embodiment of this application further provides a computer program product including computer-executable instructions. When the computer program product runs, some or all steps of the method according to any one of the first aspect, the second aspect, or the possible implementations of the first aspect or the second aspect are performed.

According to a fifteenth aspect, an embodiment of this application further provides a computer program including computer-executable instructions. When the computer program is run, some or all steps of the method according to any one of the first aspect, the second aspect, or the possible implementations of the first aspect or the second aspect are performed.

According to a sixteenth aspect, an embodiment of this application further provides a chip system. The chip system includes a processor, and may further include a memory, configured to implement the method according to any one of the first aspect, the second aspect, or the possible implementations of the first aspect or the second aspect. The chip system may include a chip, or may include a chip and another discrete component.

According to a seventeenth aspect, an embodiment of this application further provides a communication system, including the first communication apparatus provided in the third aspect, the fifth aspect, the seventh aspect, the ninth aspect, and the possible implementations of the foregoing aspects, and the second communication apparatus provided in the fourth aspect, the sixth aspect, the eighth aspect, the tenth aspect, and the possible implementations of the foregoing aspects.

**BRIEF DESCRIPTION OF DRAWINGS**

The following describes some accompanying drawings in embodiments of this application.

FIG. 1 is a schematic diagram of a communication system to which an embodiment of this application is applicable;
FIG. 2 is a schematic diagram of a phase-ambiguous waveform;
FIG. 3 is a schematic diagram of a phase ranging principle;
FIG. 4a is a schematic diagram of a downlink time difference of arrival positioning principle;
FIG. 4b is a schematic diagram of an uplink time difference of arrival positioning principle;
FIG. 5a is a schematic diagram of resource element distribution of a positioning reference signal;
FIG. 5b is a schematic diagram of resource element distribution of a sounding reference signal;
FIG. 6a is a schematic diagram of time-domain distribution of positioning reference signals;
FIG. 6b is a schematic diagram of time-domain distribution of sounding reference signals;
FIG. 7a is a schematic diagram of configuration of a primary positioning reference signal and a secondary positioning reference signal;
FIG. 7b is a schematic diagram of configuration of a primary positioning reference signal and a secondary positioning reference signal;
FIG. 8 is a schematic diagram of an application scenario to which an embodiment of this application is applicable;
FIG. 9 is a schematic diagram of another application scenario to which an embodiment of this application is applicable;
FIG. 10 is a schematic interaction diagram of a wireless sensing method according to an embodiment of this application;
FIG. 11a is a schematic diagram of time-frequency domain distribution of a first signal and a second signal according to an embodiment of this application;
FIG. 11b is a schematic diagram of time-frequency domain distribution of positioning reference signals;
FIG. 11c is a schematic diagram of time-frequency domain distribution of sounding reference signals;
FIG. 12 is a schematic interaction diagram of a wireless sensing method according to an embodiment of this application;
FIG. 13 is a schematic interaction diagram of a wireless sensing method according to an embodiment of this application;
FIG. 14 is a schematic interaction diagram of a wireless sensing method according to an embodiment of this application;
FIG. 15 is a schematic interaction diagram of a wireless sensing method according to an embodiment of this application;
FIG. 16 is a schematic diagram of a communication apparatus according to an embodiment of this application;
FIG. 17 is a schematic diagram of a communication apparatus according to an embodiment of this application;
FIG. 18 is a schematic diagram of a communication apparatus according to an embodiment of this application; and
FIG. 19 is a schematic diagram of a communication apparatus according to an embodiment of this application.

**DESCRIPTION OF EMBODIMENTS**

Embodiments of this application provide a wireless communication method and an apparatus, to flexibly configure a resource while meeting a sensing requirement.
The following describes embodiments of this application with reference to the accompanying drawings in embodiments of this application.
In this application, "/" represents "or". The term "and/or" is only an association relationship for describing associated objects and represents that three relationships may exist. For example, B and/or C may represent the following three cases: Only B exists, both B and C exist, and only C exists. In the specification and claims of embodiments of this application, terms "first", "second", and the like are intended to distinguish between different objects, and are not intended to describe a particular order of the objects unless otherwise specified. For example, a first communication apparatus, a second communication apparatus, and the like are used to distinguish different communication apparatuses, but are not used to describe a particular order of the target objects. In embodiments of this application, words such as "example" or "for example" indicate examples, instances, or descriptions. Any embodiment or solution described as "example" or "for example" in embodiments of this application should not be construed as being more preferred or having more advantages than another embodiment or design solution. In the descriptions of embodiments of this application, unless otherwise stated, "a plurality of" means two or more than two. For example, a plurality of processing units mean two or more than two processing units.

The technical solutions in this application may be applied to a cellular system related to the 3rd generation partnership project (3rd generation partnership project, 3GPP), for example, a 4th generation (4th generation, 4G) communication system such as a long term evolution (long term evolution, LTE) system, or a 5th generation (5th generation, 5G) communication system such as a new radio (new radio, NR) system, or may be applied to a wireless fidelity (wireless fidelity, Wi-Fi) system, a communication system that supports convergence of a plurality of wireless technologies, or a future-oriented evolution system.

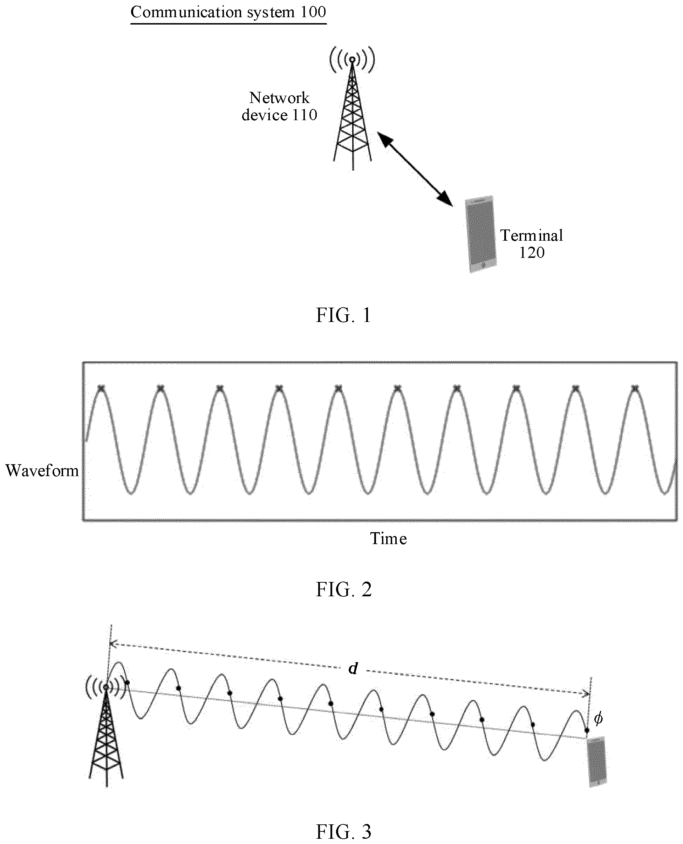

FIG. 1 shows an example of a communication system to which an embodiment of this application is applicable. Refer to FIG. 1. The communication system 100 includes at least one network device 110 and at least one terminal 120.

The terminal 120 mentioned in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a communication device carried on a high-altitude aircraft, a wearable device, an unmanned aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus that can support the terminal device in implementing the function, for example, a chip system. The apparatus may be mounted in the terminal device or used together with the terminal device. In this embodiment of this application, the chip system may include a chip, or may include a chip and another discrete component.

The network device 110 is a device having a wireless transceiver function, and is configured to communicate with a terminal device. The network device may be an evolved NodeB (evolved NodeB, eNB or eNodeB) in LTE, a base station in a 5G network or a base station in a future evolved public land mobile network (public land mobile network, PLMN), a broadband network gateway (broadband network gateway, BNG), an aggregation switch, a non-third generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a 5G base station, a device for implementing a base station function in the future, an access node in a Wi-Fi system, a transmission point (transmitting and receiving point, TRP), a transmission point (transmitting point, TP), a mobile switching center, or a device that undertakes a base station function in device-to-device (Device-to-Device, D2D), and vehicle-to-everything (vehicle-to-everything, V2X), or machine-to-machine (machine-to-machine, M2M) communication, and the like. This is not specifically limited in embodiments of this application.

The network device 110 may communicate and interact with a core network device, to provide a communication service for the terminal device. For example, the core network device is a device in a 5G network core network (core network, CN). As a bearer network, the core network provides an interface to a data network, provides communication connection, authentication, management, and policy control for a terminal, and bearers a data service.

In embodiments of this application, an apparatus configured to implement a function of the network device may be a network device, or may be an apparatus that can support the network device in implementing the function, for example, a chip system. The apparatus may be mounted in the network device or used together with the network device.

For ease of understanding of embodiments disclosed in this application, related concepts in this application are briefly described.

1. **Root mean square (root mean square, RMS) bandwidth:** For a time-domain signal $s(t)$, root mean square bandwidth $B_{RMS}$ thereof is defined as follows:

$$B_{RMS} = \sqrt{\frac{\int_{-\infty}^{\infty}|S(f)|^2 f^2 df}{\int_{-\infty}^{\infty}|S(f)|^2 df}}.$$

f is a frequency, S(f) is a spectrum obtained after Fourier transform is performed on the time-domain signal $s(t)$, and $|S(f)|^2$ is a power spectral density of the signal.

2. **Phase ambiguity (Phase ambiguity):** For a periodic signal, due to a period of a waveform, a difference between a phase $\psi(t)$ detected by a receiver and a real phase $\varphi(t)$ of the signal may be an integer of $2\pi$ radians, that is, $\psi(t) - \varphi(t) = N\cdot 2\pi$, where N is an integer. This phenomenon is referred to as phase ambiguity, where N is referred to as integer cycle ambiguity, or integer ambiguity (integer ambiguity). For example, for a sine wave monophonic signal, a phase detected by the receiver is $\pi/2$, and a real phase may be $\pi/2\pm N\cdot 2\pi$. As shown in FIG. 2, the real phase may be any one of locations marked with "x".

3. **Phase ranging:** Ranging is performed by detecting a phase change of a signal in a propagation process. The signal may be a single-carrier signal, or may be a signal including a plurality of carriers, for example, a dual-carrier signal or an orthogonal frequency division multiplexing (orthogonal frequency division multiplexing, OFDM) signal.

As shown in FIG. 3, for a single-carrier signal, assuming that a phase difference of a single-carrier signal between a transmitter and a receiver is $\varphi$ radians, it may be inferred that a range d between the transmitter and the receiver is:

$$d = (N + \frac{\phi}{2\pi})\lambda_1 \qquad (1)$$

The unknown integer N is integer ambiguity, and $\lambda_1$ is a wavelength of the single-carrier signal. The single-carrier signal has only one frequency component, and a signal processing procedure and algorithm in frequency domain can be greatly simplified. In time domain, a phase-locked loop (Phase Locked Loop, PLL) can be used to perform low-complexity processing to implement frequency detection and phase tracking. Therefore, single-carrier phase-based ranging has an advantage of simple signal processing. In addition, a feature that the phase of the single-carrier signal changes continuously (without jump) in terms of time is very suitable for continuous phase detection, and therefore is applicable to an application scenario in which continuous ranging is performed on a target. When an initial range of a target is known (that is, initial integer ambiguity is known), a range of the target may be updated by continuously detecting a phase change of the single-carrier signal. Provided that a moving range of the target does not exceed a single carrier wavelength within a time interval between every two adjacent times of detection, a range ambiguity problem will not be introduced.

For a dual-carrier signal, a basic principle of phase ranging is as follows: It is assumed that frequencies of two carriers in the dual-carrier signal are $f_1$ and $f_2$, a frequency difference is $\Delta f = |f_1 - f_2|$, phase differences of two frequency components $f_1$ and $f_2$ of the dual-carrier signal at the transmitter and the receiver are $\phi_1 = 2\pi f_1 \tau$ and $\phi_2 = 2\pi f_2 \tau$ respectively, and a signal propagation speed (a propagation speed of an electromagnetic wave) is c. In this case, after time $\tau$, a transmission range d of the dual-carrier signal is:

$$d = c\tau = c\frac{\Delta\phi}{2\pi\Delta f} = (N + \frac{\Delta\varphi}{2\pi})\frac{c}{\Delta f} \qquad (2)$$

$\Delta\phi = |\phi_1 - \phi_2|$, and a phase ambiguity phenomenon exists in phase measurement, to be specific, a phase uses $2\pi$ as a period, a value of $\Delta\phi$ cannot be directly detected, and only a value $\Delta\varphi$ between 0 and $2\pi$ can be detected. This may be represented as $\Delta\phi = N \cdot 2\pi + \Delta\varphi$, where $\Delta\varphi \in [0, 2\pi)$, and N is an integer ambiguity. In this application, an equivalent wavelength of the dual-carrier signal is defined as $\lambda_2 = \frac{c}{\Delta f}$.

A principle of multi-carrier phase ranging is similar to that of dual-carrier phase ranging. The transmitter transmitter sends a plurality of carriers $\{f_i\}$, i = 1, 2, ... M. Correspondingly, the receiver detects a plurality of phase differences $\{\phi_i\}$, i = 1, 2, ... , M. A phase difference of a frequency component $f_i$ at the transmitter and the receiver is $\phi_i = 2\pi f_i \tau$.

When there is no phase ambiguity in a plurality of phase differences $\{\phi_i\}$, i = 1, 2, ... , M, these phase differences $\{\phi_i\}$, i = 1, 2, ..., M and the carrier frequency $\{f_i\}$, i = 1, 2, ... M are in a linear relationship, that is, $\phi_i = \alpha f_i$, where the slope $\alpha$ meets $\alpha = 2\pi\tau$. By fitting the linear relationship between the phase differences $\{\phi_i\}$, i = 1, 2, ... , M and the carrier frequency $\{f_i\}$, i = 1, 2, ..., M, the slope $\alpha$ of the linear relationship can be obtained. Then, the signal propagation time $\tau$ is obtained based on $\alpha = 2\pi\tau$, and a propagation range d is calculated:

$$d = c\tau = c\frac{\alpha}{2\pi} \qquad (3)$$

A fitting method for the slope $\alpha$ may be a zero forcing (zero-forcing, ZF) method, a linear minimum mean square error (linear minimum mean square error, LMMSE) method, or the like.

When phase ambiguity exists in a plurality of phase differences $\{\phi_i\}$, i = 1, 2, ..., M, linear fitting cannot be directly performed. In a possible implementation, it is assumed that integer ambiguity N of phase differences $\{\phi_i\}$, i = 1, 2, ..., M of a same group of carriers is the same, that is, $\phi_i + 2\pi N = 2\pi f_i \tau$. Then, $\{\phi_i\}$, i = 2, ..., M and $\phi_1$ are used to perform a difference operation to obtain $\{\varphi_i\}$, i = 2, ..., M, where $\varphi_i = |\phi_1 - \phi_i|$, to eliminate the unknown integer ambiguity N. Correspondingly, $\{f_i\}$, i = 2, ... , M and $f_1$ are used to perform a difference operation to obtain $\{\Delta f_i\}$, i = 2, ..., M, where $\Delta f = |f_1 - f_i|$. In this case, $\{\varphi_i\}$, i = 2, ... , M and $\{f_i\}$, i = 2, ... , M meet a simple linear relationship $\varphi_i = 2\pi\Delta f_i \tau = \alpha\Delta f_i$, and a slope $\alpha$ of the linear relationship may be obtained by using a linear fitting method such as ZF and LMMSE, to estimate a propagation range d by using the foregoing formula (3). The assumption that the integer ambiguity N of the phase differences of the same group of carriers is the same is true on the premise that values of $\{\varphi_i\}$, i = 2, ... , M are all less than $2\pi$, that is $\varphi_i = 2\pi\Delta f_i \tau < 2\pi$. Therefore, $\tau < \frac{1}{\Delta f_i}$ may be obtained, or equivalently:

$$d = c\tau < \frac{c}{\Delta f_i} \qquad (4)$$

When a ranging coverage meets the foregoing formula (4), it can be ensured that the linear fitting method works normally in the multi-carrier ranging. A maximum unambiguous range of the multi-carrier signal is a frequency difference between any two subcarriers in non-zero power subcarriers of the multi-carrier signal. Assuming that subcarrier spacings of the multi-carrier signal are uniform, that is, values of $\Delta f_i$ for different i are the same, an equivalent wavelength of the multi-carrier signal may be defined as $\lambda_3 = \frac{c}{\Delta f_i}$.

4. **Maximum unambiguous range:** When a signal phase is used for ranging, phase ambiguity causes range ambiguity. That is, a range d measured by a receiver may differ from an actual range $d_0$ by an integer quantity of wavelengths $\lambda$, that is, d - $d_0$ = N$\lambda$, where N is an integer ambiguity. Therefore, the receiver cannot determine a point, in a plurality of possible range points, on which the receiver is located. $\lambda$ is referred to as a maximum unambiguous range (Unambiguous range).

In the single-carrier phase ranging, $\lambda$ is a carrier wavelength. For example, in an NR frequency band, a wavelength of a carrier at a 2 GHz frequency is 15 cm, and a wavelength of a carrier at a 3 GHz frequency is 10 cm. For another example, a wavelength of a carrier at a 5 GHz frequency in a wireless local area network (wireless local area network, WLAN) frequency band is 6 cm. The cm-level maximum unambiguous ranges result in range ambiguity in an m-level or even km-level ranging coverage in an actual application. To obtain an actual range, unknown integer ambiguity needs to be obtained through resolution (resolve).

In multi-carrier differential phase ranging, $\lambda$ is an equivalent wavelength, that is, a signal propagation speed divided by a difference between carrier frequencies. Because the difference between carrier frequencies is usually far less than the carrier frequency, a maximum unambiguous range can be greatly increased. A large maximum unambiguous range can ensure that there is no range ambiguity in the targeted ranging coverage (in a targeted ranging coverage), to resolve a problem of unknown integer ambiguity.

For example, assuming that a signal propagation speed is $3 \times 10^8$ m/s and a frequency of a single-carrier signal is 3 GHz, a maximum unambiguous range of the signal is $\frac{3\times10^8 m/s}{3\mathrm{GHz}} = 10$ cm. Assuming that frequencies of a dual-carrier signal are 3 GHz and 3.1 GHz, a maximum unambiguous range of the signal is $\frac{3\times10^8 m/s}{3.1\mathrm{GHz}-3\mathrm{GHz}} = 3$ m. Therefore, in this example, for any ranging coverage that exceeds 10 cm, a problem of range ambiguity may exist in single-carrier ranging, and unknown integer ambiguity needs to be resolved. However, dual-carrier ranging can support unambiguous ranging within larger ranging coverage (3 m). A subcarrier configuration in NR is further used as an example. For an NR bandwidth part (bandwidth partition, BWP) configuration with a center frequency of 3 GHz, if single-carrier ranging is used, a maximum unambiguous range is 10 cm. If dual-carrier ranging is used, assuming that a subcarrier spacing is 15 kHz, a frequency difference between two subcarriers used for ranging is 10 resource blocks (Resource block, RB), that is, 15 kHz*12*10 = 1.8 MHz, and a maximum unambiguous range is 166.67 m.

5. **Ranging precision:** indicates accuracy of a ranging result, that is, an error between a measured range and an actual range. In a ranging system, a measurement range of a specific target can be modeled as a random variable d, where d is affected by a system error and noise. Assuming that a real range of the target is $d_0$, a common definition of ranging precision $\delta$ is a root mean square of a difference between the measurement value d and the real value $d_0$, that is,

$$\delta \overset{\text{def}}{=} \sqrt{\text{E}[(d - d_0)^2]} \qquad (5)$$

E[x] represents a mean (mean) of a random variable x. The ranging precision mentioned in this application may be defined based on the foregoing formula (5).

According to Cramer-Rao Lower Bound (Cramer-Rao Lower Bound, CRLB, or CRB for short), ranging is performed by using a baseband signal, and ranging precision is inversely proportional to bandwidth; and ranging is performed by using a phase of a radio frequency signal. In a condition without phase ambiguity, the ranging precision is inversely proportional to the frequency of the radio frequency signal.

6. **Positioning based on time difference measurement**

A plurality of transmitters send signals generated by a specific sequence, and a receiver receives the signals sent by the plurality of transmitters and performs a correlation operation by using an autocorrelation feature of the sequence, to measure a time difference of arrival of the signals at the receiver. In a case of two-dimensional spatial positioning, each time difference corresponds to a hyperbola that uses a transmitter as a focus, and a point at which a plurality of hyperbolas intersect is a location of the receiver. For example, NR supports two positioning methods that are based on time difference measurement: observed time difference of arrival (Observed Time Difference Of Arrival, OTDOA) and uplink time difference of arrival (Uplink Time Difference Of Arrival, UTDOA).

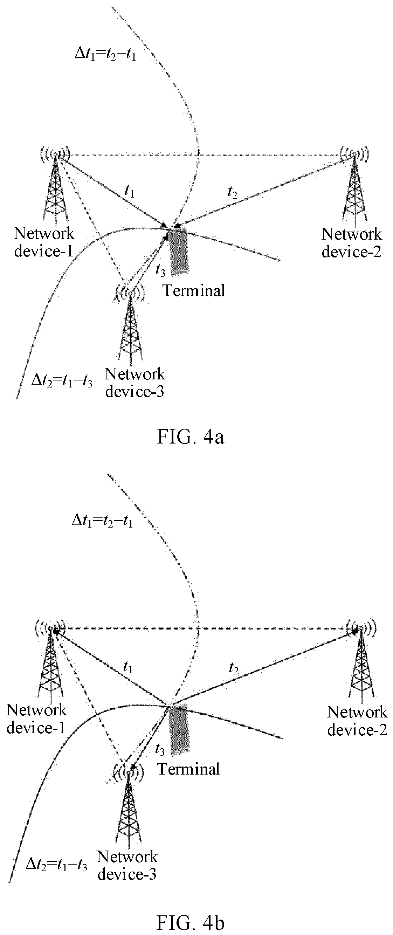

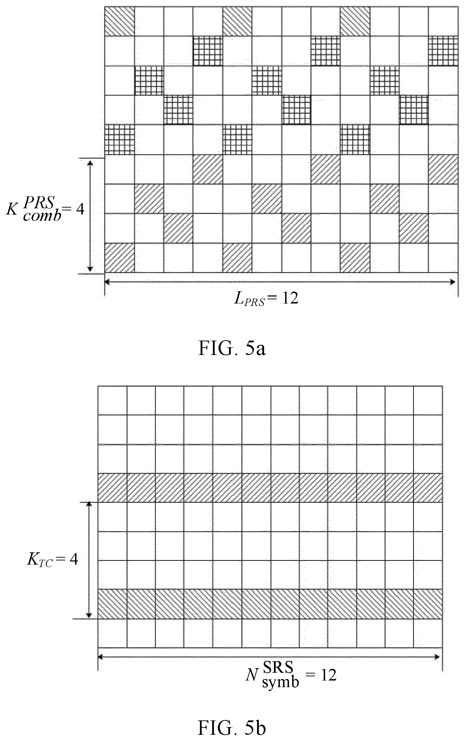

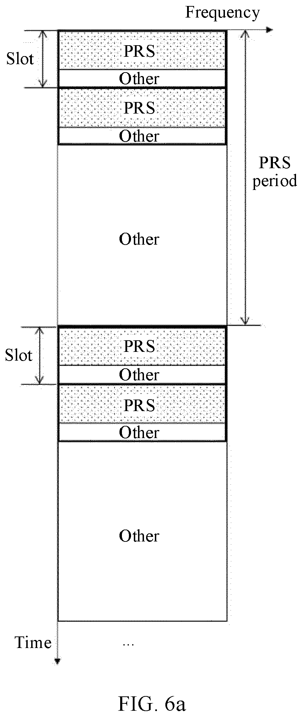

A principle of OTDOA-based positioning is shown in FIG. 4a. A plurality of network devices simultaneously send PRSs generated by a Gold sequence (Gold sequence), and a terminal receives the signals and measures time differences of arrival of the signals (waveforms) of the plurality of network devices at the terminal. Each time difference corresponds to a hyperbola that uses a network device as a focus, and a point at which the plurality of hyperbolas intersect is a location of the terminal. A resource element (resource element, RE) carrying a PRS is distributed on a time-frequency resource in a slot (slot) according to a predefined pattern (pattern), that is, a specific pattern is presented after the PRS is mapped (mapping) in time-frequency domain. A specific mapping manner is determined based on parameters such as a quantity of OFDM symbols in time domain, a period in time domain, and a comb (comb) interval (indicating a frequency domain density) in frequency domain. In time domain, the PRS appears on $L_{\text{PRS}} \in \{2, 4, 6, 12\}$ consecutive symbols of one slot, and a period of the PRS is $T_{\text{per}}^{\text{PRS}} \in \{4,5,8,10,16,20,32,40,64,80,160,320,640,1280,2560,5120,10240\}$ slots. In frequency domain, a value of the density of the PRS is $K_{\text{comb}}^{\text{PRS}} \in \{2, 4, 6, 12\}$. FIG. 5a is a schematic diagram of time-frequency domain distribution of a PRS, where a horizontal coordinate represents a time domain, a vertical coordinate represents a frequency domain, each grid represents one RE, and one RE occupies one symbol in time domain and occupies one subcarrier in frequency domain. As shown in FIG. 5a, the PRS is distributed on 12 OFDM symbols in time domain, that is, $L_{\text{PRS}}$ = 12; and in frequency domain, a frequency domain density is that one RE of the PRS exists in every four REs, that is, $K_{\text{comb}}^{\text{PRS}} = 4$. FIG. 6a is a schematic diagram of time domain distribution of PRSs, where a horizontal coordinate represents a time domain, and a vertical coordinate represents a frequency domain. As shown in FIG. 6a, a period in which a PRS appears is several slots; a PRS pattern is repeated twice in each period, that is, two slots in the several slots in each period include a PRS; and for a slot including a PRS, the PRS exists on 12 symbols in 14 symbols of the slot. In frequency domain, PRSs are distributed based on a comb structure with a specific frequency domain density. The figure does not show specific distribution based on a comb structure.

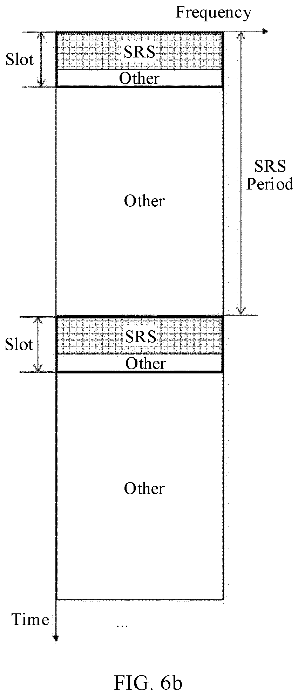

A UTDOA principle is shown in FIG. 4b. A terminal sends an SRS generated by a ZC (Zadoff-Chu) sequence, and a plurality of network devices receive the signal and measure time of arrival of the signal (waveform). Each time difference of arrival defines one hyperbola that a network device as a focus, and a point at which the plurality of hyperbolas intersect is a location of a terminal. Similar to the PRS, an SRS also appears in a specific pattern (pattern) in time domain and frequency domain. In time domain, the SRS appears on $N_{\text{symb}}^{\text{SRS}} \in \{1, 2, 4, 8, 12\}$ consecutive symbols in a slot. The SRS also appears in a specific period based on a configuration, and a unit of the period is a slot. In frequency domain, the SRS appears at an interval of $K_{\text{TC}} \in \{2, 4, 8\}$ with a comb structure. FIG. 5b is a schematic diagram of time-frequency domain distribution of an SRS, where a horizontal coordinate represents a time domain, a vertical coordinate represents a frequency domain, each grid represents one RE, and one RE occupies one symbol in time domain and occupies one subcarrier in frequency domain. As shown in FIG. 5b, the SRS is distributed on 12 consecutive OFDM symbols in time domain, that is, $N_{\text{symb}}^{\text{SRS}} = 12$; and in frequency domain, a frequency domain density is that one RE of the SRS exists in every four REs, that is, $K_{\text{TC}}$ = 4. FIG. 6b is a schematic diagram of time domain distribution of PRSs, where a horizontal coordinate represents a time domain, and a vertical coordinate represents a frequency domain. As shown in FIG. 6b, a period in which an SRS appears is several slots; an SRS appears in one slot in each period, that is, one slot in the several slots in each period includes a PRS; and for a slot including an SRS, the SRS exists on 12 symbols in 14 symbols of the slot. In frequency domain, SRSs are distributed based on a comb structure with a specific frequency domain density. The figure does not show specific distribution based on a comb structure.

A communication-based sensing technology may be applied to a continuous ranging scenario. In this scenario, ranging needs to be continuously performed on a target, to implement continuous ranging on the target. In a possible implementation, the continuously ranging on the target may be divided into two stages: initial ranging and continuous ranging. In the initial ranging stage, an initial range of the target is determined, and in the continuous ranging stage, continuous ranging is performed on the target based on the measured initial range. Based on prior information (an initial ranging result) of the target, the continuous ranging stage can usually use less resources to achieve same precision as the initial ranging stage. However, in current pattern definitions of a PRS and an SRS in NR, flexible resource configuration is not considered in the two stages. If the PRS and the SRS in the NR are used to perform continuous ranging, there may be a waste of bandwidth and power resources.

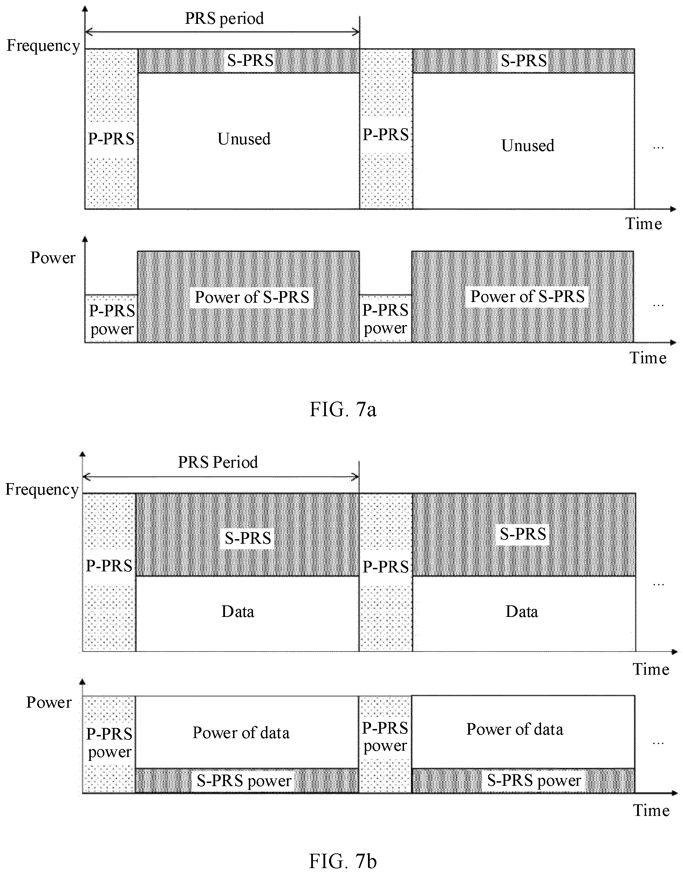

In a possible implementation, based on NR downlink measurement and positioning, a solution of combining a primary PRS (Primary PRS, P-PRS) and a secondary PRS (Secondary PRS, S-PRS) is provided for downlink ranging and positioning. The P-PRS is configured in a manner similar to that of the PRS. According to a system configuration, the P-PRS is sent in a fixed period with fixed duration, has high power, and does not coexist with data, to provide basic ranging and positioning performance. The S-PRS is a flexible auxiliary signal, and is transmitted when the P-PRS does not exist. Whether the S-PRS is on/off (On/Off), bandwidth and power of the S-PRS, and whether the S-PRS coexists with data can be flexibly configured. The bandwidth and the power of the S-PRS may be smaller than those of the P-PRS, or may be greater than those of the P-PRS. The S-PRS may coexist with the data, or data transmission may not be allowed when the S-PRS is transmitted. FIG. 7a and FIG. 7b are schematic diagrams of two types of configurations of a P-PRS and an S-PRS. As shown in FIG. 7a, the S-PRS uses small bandwidth and high power and does not coexist with data in terms of time. As shown in FIG. 7b, the S-PRS uses large bandwidth and low power and coexists with data in terms of time. In this solution, a signal phase of the S-PRS is discontinuous, and the foregoing positioning based on time difference measurement is still used. Therefore, in a continuous ranging scenario, correlation calculation of a large quantity of sampling points or complex parameter estimation needs to be performed, and calculation complexity is high.

In view of the foregoing problem, this application provides a wireless sensing method and an apparatus, so that when a communication-based sensing technology is applied to continuous ranging, a signal transmission resource can be flexibly allocated based on a sensing requirement.

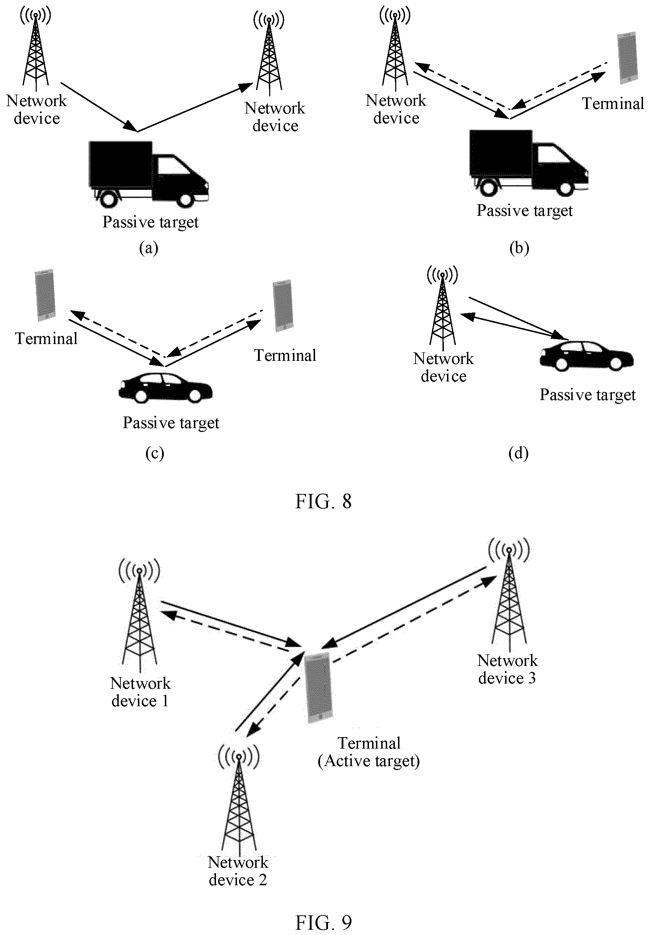

The technical solutions provided in embodiments of this application may be applied to sensing a passive target or an active target. The sensing may include measuring a physical parameter of a target or an environment, for example, ranging, speed testing, positioning, and time synchronization. A sensing target can be a passive target (an animal, a car, or an uncrewed aerial vehicle) or an active target. In a possible implementation, one or more transmitter transmitter s or one or more receiver s sense a passive target existing in an environment. FIG. 8 is a schematic diagram of scenarios in which the passive target is sensed. In the scenario (a) in FIG. 8, a signal is transmitted between network devices to sense a moving object in the environment. In the scenario (b) in FIG. 8, a signal is transmitted between a network device and a terminal to sense a moving object in the environment. For example, in smart transportation, a sensing signal is transmitted between a network device and a terminal, and a sensing capability of the network device or the terminal is used to sense whether there is a moving object at a junction, to assist driving and prevent an accident.

In a possible scenario, the network device sends a signal to the terminal, and the terminal senses a passive target based on the signal (as shown by a solid arrow). In a possible scenario, the terminal sends a signal to the network device, and the network device senses a passive target based on the signal (as shown by a dashed arrow). In the scenario (c) in FIG. 8, a signal is transmitted between terminals to sense a vehicle in the environment. In the scenario (d) in FIG. 8, a network device self-transmits a signal and self-receives a signal to sense a vehicle in the environment. In another possible implementation, one or more transmitter transmitter s and one or more receiver s perform sensing. FIG. 9 is a schematic diagram of a scenario in which an active target is sensed. In FIG. 9, a signal is transmitted between one or more network devices and a terminal, to implement sensing of the terminal (an active target). In a possible scenario, the network device sends a signal to the terminal, and the terminal performs sensing based on the signal (as shown by a solid arrow). In a possible scenario, the terminal sends a signal to the network device, and the network device performs sensing based on the signal (as shown by a dashed line arrow).

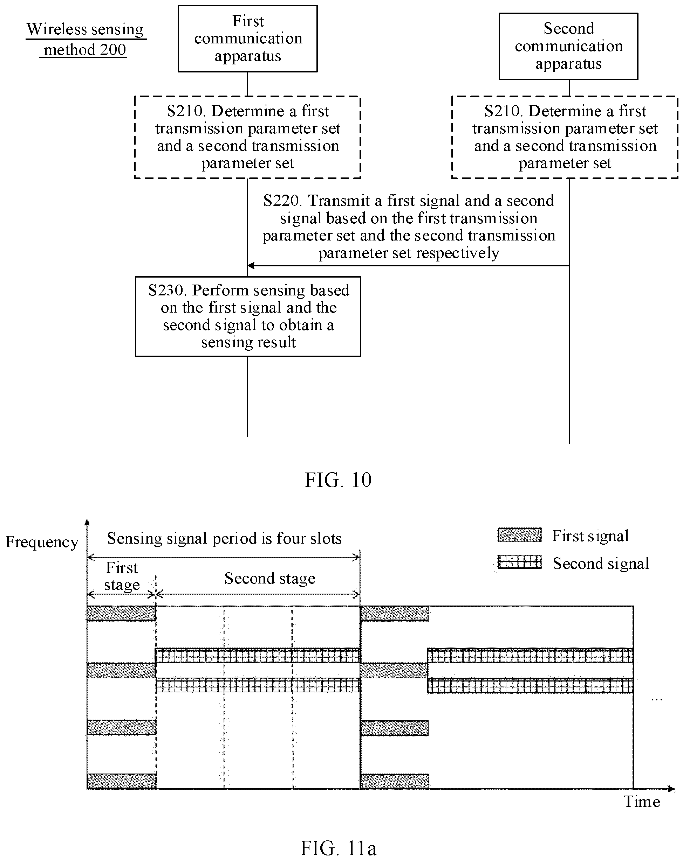

FIG. 10 is a schematic interaction diagram of a wireless sensing method 200 according to an embodiment of this application. In the wireless sensing method 200, a second communication apparatus sends a first signal and a second signal to a first communication apparatus based on a first transmission parameter set and a second transmission parameter set respectively, so that the first communication apparatus performs sensing based on the first signal and the second signal to obtain a sensing result. At least one parameter in the first transmission parameter set corresponding to the first signal meets a first condition related to a targeted ranging coverage, and at least one parameter in the second transmission parameter set corresponding to the second signal meets a second condition related to targeted ranging precision. Different transmission parameter sets may be used for different sensing requirements, to implement flexible configuration of transmission resources.

This embodiment of this application relates to the first communication apparatus and the second communication apparatus. The first communication apparatus may be a terminal or a network device, and the second communication apparatus may also be a terminal or a network device. In a self-transmitting and self-receiving scenario, the first communication apparatus and the second communication apparatus may be one apparatus.

S210. The first communication apparatus and/or the second communication apparatus determine/determines a first transmission parameter set and a second transmission parameter set.

The first transmission parameter set corresponds to a first signal, and the second transmission parameter set corresponds to a second signal. The first transmission parameter set and the second transmission parameter set respectively indicate information about a transmission resource of the first signal and information about a transmission resource of the second signal, where the transmission resource may include a frequency domain resource and/or a time domain resource. At least one parameter in the first transmission parameter set meets a first condition, and the first condition is determined based on a targeted ranging coverage. At least one parameter in the second transmission parameter set meets a second condition, and the second condition is determined based on targeted sensing precision.

The first signal and the second signal are used by the first communication apparatus for sensing, and the first signal and the second signal may be referred to as sensing signals. Optionally, the first signal and the second signal may alternatively be reference signals. The first signal and the second signal each may be specifically a waveform, or may be a sequence carried on a waveform.

In a possible implementation, the first transmission parameter set includes a first subcarrier quantity corresponding to the first signal, and the second transmission parameter set includes a second subcarrier quantity corresponding to the second signal. A subcarrier quantity corresponding to a signal may be a quantity of subcarriers carrying the signal. A larger subcarrier quantity indicates more frequency domain resources occupied by the signal. If the subcarrier quantity is 1, the signal is carried by a single carrier. In a possible implementation, the second subcarrier quantity is less than the first subcarrier quantity, that is, a frequency domain resource for transmitting the second signal is less than a frequency domain resource for transmitting the first signal.

Content related to the first transmission parameter set and the second transmission parameter set is described in detail below. Details are not described herein again.

Step S210 is an optional step. When the first signal and the second signal are transmitted between the first communication apparatus and the second communication apparatus for the first time, the first transmission parameter set and the second transmission parameter set need to be determined. In a period of time after the first transmission, the first transmission parameter set and the second transmission parameter set that are used during the first transmission may be used when the first signal and the second signal are transmitted again.

S220. The second communication apparatus sends the first signal and the second signal based on the first transmission parameter set and the second transmission parameter set respectively. Correspondingly, the first communication apparatus receives the first signal and the second signal based on the first transmission parameter set and the second transmission parameter set.

In a possible implementation, the second communication apparatus separately sends the first signal and the second signal in one sensing period, and the first communication apparatus separately receives the first signal and the second signal in one sensing period. The second communication apparatus periodically sends the first signal and the second signal, and a time domain period in which the first signal and the second signal are sent is referred to as a sensing period. In a possible implementation, one sensing period may be several slots. For example, one sensing period is 1 to 16 slots. In a possible implementation, a maximum value of the sensing period may be one radio frame.

In LTE and NR, one radio frame is 10 ms, and one radio frame is equal to 10 subframes. In LTE, one subframe is two slots, and one slot is seven OFDM symbols. In NR, a length of a subframe is related to a subcarrier spacing. For example, when a subcarrier spacing is 15 kHz, one subframe is one slot; when a subcarrier spacing is 30 kHz, one subframe is two slots; when a subcarrier spacing is 60 kHz, one subframe is four slots. One slot in NR is 14 OFDM symbols (normal cyclic prefix (normal CP) mode) or 12 OFDM symbols (extended cyclic prefix (extended CP) mode). A symbol, a slot, a subframe, and a radio frame in this application may be a value in LTE, may be a value in NR, or may be a value in a future evolved wireless communication system. This is not limited in this application.

In a possible implementation, a first signal is transmitted in a first stage of a sensing period, and a second signal is transmitted in a second stage of the sensing period. In this application, the first signal may be a first-stage sensing signal, and the second signal may be a second-stage sensing signal.

In a possible implementation, duration occupied by the first stage is shorter than duration occupied by the second stage.

S230. The first communication apparatus performs sensing based on the first signal and the second signal to obtain a sensing result.

That the first communication apparatus performs sensing based on the first signal and the second signal to obtain a sensing result specifically includes: performing sensing based on the first signal to obtain a first result, performing sensing based on the second signal to obtain a second result, and determining the sensing result based on the first result and the second result.

As described above, the sensing may include ranging, speed measurement, positioning, and the like. The following uses ranging as an example for description. However, the method provided in this application is not limited to ranging, and may be further applied to another sensing scenario.

In a ranging scenario, the first signal may be used for initial ranging, and the second signal may be used for continuous ranging.

In a possible implementation, the first signal is a multi-carrier signal, and that the first communication apparatus performs sensing based on the first signal to obtain a first result includes: obtaining, based on the first signal, a measurement value $d_1$ of a targeted range by using a multi-carrier phase ranging method, that is, the first result is $d_1$, and a parameter in the transmission parameter set of the first signal is determined based on the targeted ranging coverage, to ensure that there is no range ambiguity within the targeted ranging coverage.

That the first communication apparatus performs sensing based on the second signal to obtain a second result includes: obtaining, based on the second signal, a measurement value $\{d_{2,i}\}$, i = 1, 2, ... , N of the targeted range by using a phase ranging method, where i is an integer ambiguity, that is, the second result is $\{d_{2,i}\}$, i = 1, 2, ..., N. The targeted ranging coverage is not considered for a transmission parameter of the second signal. Therefore, range ambiguity may exist. A quantity N of measurement values may be obtained by dividing the targeted ranging coverage by a maximum unambiguous range of the second signal. When the second signal is a single-carrier signal, the maximum unambiguous range of the second signal is a carrier wavelength of the second signal, that is, a signal propagation speed divided by a carrier frequency of the second signal. When the second signal is a multi-carrier signal, the maximum unambiguous range of the second signal is an equivalent wavelength. For calculation of the equivalent wavelength, refer to the foregoing descriptions related to phase ranging and the maximum unambiguous range. Details are not described herein again. The parameter in the transmission parameter set of the second signal is determined based on the targeted ranging precision, so that it can be ensured that the second result meets a ranging precision requirement.

That the first communication apparatus determines the sensing result based on the first result and the second result may specifically include: separately calculating absolute values $\{e_i\}$, i = 1, 2, ... , N of differences between a measurement value $d_1$ of the first result and a plurality of measurement values $\{d_{2,i}\}$, i = 1, 2, ... , N in the second result, and selecting a measurement value $d_{2,m}$ corresponding to a minimum absolute value $e_m$ from the plurality of measurement values of the second result as the sensing result, where $m \in \{1, 2, ..., N\}$.

In a possible implementation, a parameter in the first transmission parameter set corresponding to the first signal needs to meet that ranging precision that is based on the first signal can be ensured, and that ranging based on the second signal is unambiguous. A ranging error of the first signal needs to be less than the maximum unambiguous range corresponding to the second signal. For example, assuming that an actual value of the targeted range is 100 m, the maximum unambiguous range corresponding to the second signal is 30 cm, and a maximum error corresponding to the precision corresponding to the second signal is 5 cm, the second result may be {..., 99.45 m, 99.75 m, 100.05 m, 100.35 m, 100.65 m...}. In this case, an error corresponding to the precision corresponding to the first signal needs to be less than 30 cm, for example, 10 cm. In this case, the first result may be 100.1 m, and the sensing result that may be obtained based on the first result and the second result is 100.05 m. If the error corresponding to the precision corresponding to the first signal is greater than or equal to 30 cm, a value closest to the actual range may not be determined. For example, if the error corresponding to the precision corresponding to the first signal is 30 cm, the first result may be 100.3 m, and the sensing result obtained based on the first result and the second result is 100.35 m, instead of 100.05 m closest to 100 m.

In the wireless sensing method 200, the transmission parameter sets of the two signals (the first signal and the second signal) are determined based on the targeted ranging coverage and the targeted ranging precision respectively, and the first signal and the second signal are separately transmitted. The at least one parameter in the parameter set of the first signal meets the first condition related to the targeted ranging coverage, to ensure there is no range ambiguity within the targeted ranging coverage. This may be used for initial ranging of a target. The at least one parameter in the parameter set of the second signal meets the second condition related to the targeted ranging precision, and may be used for continuous ranging. Different parameter sets may be for implementing flexible configuration of transmission resources for different sensing requirements. In some possible implementations, a frequency domain resource occupied by the second signal is less than a frequency domain resource occupied by the first signal. This improves resource utilization during continuous ranging on a target while meeting a sensing requirement.

The following describes the first transmission parameter set of the first signal and the second transmission parameter set of the second signal.

In addition to the subcarrier quantity, a signal transmission parameter may further include one or more of the following: a subcarrier spacing quantity K, an orthogonal frequency division multiplexing OFDM symbol quantity L, and sample energy E.

The subcarrier spacing quantity K indicates a density of a signal in frequency domain. Larger K indicates a lower density of the signal in frequency domain, and smaller K indicates a higher density of the signal in frequency domain. For example, K = 4 indicates that there is one subcarrier carrying the first signal in every four subcarriers. The OFDM symbol quantity L indicates a time-domain resource occupied by the signal, that is, a length of an OFDM symbol occupied by the signal. Larger L indicates longer duration of the signal in time domain, and smaller L indicates shorter duration of the signal in time domain. The sample energy E of the signal is an average of squares of amplitudes of all REs constituting the signal.

1. First transmission parameter set of the first signal

The first transmission parameter set may include one or more of the following parameters: a first subcarrier quantity $M_1$ corresponding to the first signal, a first subcarrier spacing quantity $K_1$ corresponding to the first signal, a first orthogonal frequency division multiplexing OFDM symbol quantity $L_1$ corresponding to the first signal, and first sample energy $E_1$ corresponding to the first signal, where $M_1$, $K_1$, and $L_1$ are positive integers, and $E_1$ is greater than or equal to 0.

That the at least one parameter in the first transmission parameter set meets the first condition related to the targeted ranging coverage may be specifically: The first subcarrier spacing quantity $K_1$ corresponding to the first signal is determined based on the targeted ranging coverage, so that the first signal has no phase ambiguity in the targeted ranging coverage, and phase ranging based on the first signal has no ranging ambiguity in the targeted ranging coverage.

The targeted ranging coverage may be predefined in a protocol. One or more targeted ranging coverages may be defined in the standard, and different transmission parameter sets may be determined for different targeted ranging coverages. The targeted ranging coverages may be of different magnitudes. For example, the targeted ranging coverage is 2 km. In this case, the transmission parameter set of the first signal needs to ensure that there is no ranging ambiguity within 2 km. The targeted ranging coverage may alternatively be 1 km, 500 m, 400 m, 200 m, 100 m, 50 m, 20 m, 10 m, 5 m, 2 m, 1 m, or the like. The foregoing values are examples. A value of the targeted ranging coverage is not limited in this application.

In a possible implementation, a parameter in the first transmission parameter set meets the first condition, and the first condition is:

$$D \le \frac{c}{\gamma K_1 \Delta f} \qquad (6)$$

D is the targeted ranging coverage, $K_1$ is the first subcarrier spacing quantity, $\Delta f$ is a subcarrier spacing corresponding to the first signal, c is a signal propagation speed, and $\gamma$ is a preset value greater than 0 and less than or equal to 2.

The subcarrier spacing (subcarrier spacing, SCS) $\Delta f$ is a predefined system parameter. For example, a subcarrier spacing supported in LTE is 15 kHz, and subcarrier spacings supported in NR are 15 kHz, 30 kHz, 60 kHz, 120 kHz, and 240 kHz.

A value of $\gamma$ varies in different ranging scenarios. The value of $\gamma$ is related to a geometric structure formed by a transmitter, a receiver, and a target of the signal. Optionally, in an active targeted ranging scenario, the receiver and the target may be a same object. In a passive targeted ranging scenario, for example, in the scenario shown in FIG. 8, $\gamma$ is a value greater than 1 and less than or equal to 2. In a self-transmitting and self-receiving scenario, for example, in the scenario (d) in FIG. 8, $\gamma$ may be equal to 2. In an active targeted ranging scenario, for example, in the scenario shown in FIG. 9, $\gamma$ may be equal to 1. In this case, the first condition may be represented as:

$$D \le \frac{c}{K_1 \Delta f} \qquad (7)$$

In the first condition, the targeted ranging coverage D and the subcarrier spacing $\Delta f$ are system parameters defined in a standard, the signal propagation speed is a known parameter, and $\gamma$ is a parameter that may be determined based on a ranging scenario. Therefore, the subcarrier spacing quantity $K_1$ of the first signal may be determined based on these parameters. The first condition may alternatively be expressed as:

$$K_1 \leq \frac{c}{\gamma D \Delta f} \qquad (8)$$

In a possible implementation, $K_1$ is a maximum integer that meets the first condition. In same bandwidth, larger $K_1$ indicates a lower density of subcarriers carrying the first signal, and more remaining frequency domain resources that can be used. In this possible implementation, frequency domain resource utilization is improved while the targeted ranging coverage is met.

In a possible implementation, when bandwidth B for transmitting the first signal is given, $K_1$ may be represented by using the subcarrier quantity $M_1$, that is, $K_1 = B/M_1$. The first condition may be represented as follows:

$$D \leq \frac{c\, M_1}{\gamma B \Delta f} \qquad (9)$$

The first condition may implement that the first signal has no phase ambiguity in the targeted ranging coverage. The first condition imposes no limitation on ranging precision of ranging that is based on the first signal. When the first signal and the second signal are used to perform ranging, ranging precision based on the first signal needs to meet that unambiguous ranging that is based on the second signal.

In a possible implementation, the parameter in the first transmission parameter set further meets a third condition. The third condition is related to the maximum unambiguous range of the second signal. The third condition may enable the ranging precision corresponding to the first signal to meet unambiguous ranging that is based on the second signal.

In phase ranging, ranging precision is related to a frequency of a radio frequency signal and a signal-to-noise ratio, where an equivalent signal-to-noise ratio of the signal is determined based on a subcarrier quantity, an OFDM symbol quantity, and sample energy of the signal, a noise power spectral density (noise power spectral density) of the receiver, and a path loss (pathloss, PL). Therefore, when a ranging precision requirement is known (the ranging precision based on the first signal meets unambiguous ranging that is based on the second signal), the first subcarrier quantity $M_1$, the first OFDM symbol quantity $L_1$, and the first sample energy $E_1$ in the first transmission parameter set are determined based on the noise power spectral density and the path loss of the first communication apparatus, so that the ranging precision based on the first signal meets the ranging precision requirement.

The noise power spectral density is also referred to as a noise power density (noise power density), a noise spectral density (noise spectral density), a noise density (noise density), or the like. The path loss is a loss generated on a propagation path from the transmitter to the receiver.

In a possible implementation, the parameter in the first transmission parameter set meets the third condition, and the third condition is:

$$\frac{\beta_1 c}{B_{RMS}\sqrt{SNR_1}} \leq c/f_c \qquad (10)$$

$B_{RMS}$ is root mean square (Root Mean Square, RMS) bandwidth of the first signal, $SNR_1$ is an equivalent signal-to-noise ratio of the first signal, $f_c$ is a radio frequency carrier center frequency, c is the signal propagation speed, and $\beta_1$ is a first correction parameter.

In the foregoing formula (10), $\dfrac{\beta_1 c}{B_{RMS}\sqrt{SNR_1}}$ represents ranging precision corresponding to the first signal, and $c/f_c$ represents a wavelength of the second signal. Herein, it is assumed that the ranging based on the second signal is single-carrier phase ranging, and the wavelength of the second signal is the maximum unambiguous range of the second signal. This application does not limit the single-carrier phase ranging to be used for the second signal. If ranging for the second signal is multi-carrier differential phase ranging, $c/f_c$ needs to be replaced with an equivalent wavelength of a multi-carrier signal.

The third condition may alternatively be expressed as:

$$\frac{\beta_1}{B_{RMS}\sqrt{SNR_1}} \leq 1/f_c \qquad (11)$$

The root mean square bandwidth $B_{RMS}$ may be calculated in the following manner:

$$B_{\mathrm{RMS}} = \sqrt{\frac{\sum_{k \in \mathcal{K}_1} \left(\frac{1}{L_1} \sum_{l \in \mathcal{L}_1} |x_{k,l}|^2 (k\Delta f)^2\right)}{\sum_{k \in \mathcal{K}_1} \left(\frac{1}{L_1} \sum_{l \in \mathcal{L}_1} |x_{k,l}|^2\right)}} = \sqrt{\frac{\sum_{k \in \mathcal{K}_1} \sum_{l \in \mathcal{L}_1} |x_{k,l}|^2 (k\Delta f)^2}{\sum_{k \in \mathcal{K}_1} \sum_{l \in \mathcal{L}_1} |x_{k,l}|^2}} \qquad (12)$$

$l$ is an OFDM symbol index, $\mathcal{L}_1$ is an OFDM symbol index corresponding to the first signal, $k$ is a subcarrier index, $\mathcal{K}_1$ is a subcarrier index corresponding to the first signal, $x_{k,l}$ is a complex value of an RE on the OFDM symbol $l$ and a subcarrier $k$, and $\Delta f$ is a subcarrier spacing.

In a possible implementation, the subcarrier index of the first signal does not change with an OFDM symbol, and the root mean square bandwidth $B_{RMS}$ of the first signal may be expressed as:

$$B_{\mathrm{RMS}} = \sqrt{\frac{\sum_{k \in \mathcal{K}} |x_{k,l_0}|^2 (k\Delta f)^2}{\sum_{k \in \mathcal{K}} |x_{k,l_0}|^2}} \qquad (13)$$

$l_0 \in \mathcal{L}_1$, to be specific, $l_0$ may be any OFDM symbol index corresponding to the first signal.

$\beta_1$ is a constant greater than 0, and is also referred to as a correction constant. The constant includes two parts, and may be written as $\beta_1 = \beta_1^a \cdot \beta_1^b$. $\beta_1^a$ is for correcting a relationship between the ranging precision corresponding to the first signal and the root mean square bandwidth, a specific value thereof is determined by a waveform of the first signal, and a typical value of $\beta_1^a$ is $\frac{1}{\sqrt{8\pi^2}}$ for an OFDM signal. $\beta_1^b$ is for correcting a relationship between the ranging precision corresponding to the first signal and the maximum unambiguous range of the second signal (that is, the carrier wavelength of the second signal), and a typical value of $\beta_1^b$ is 3. In conclusion, a typical value of $\beta_1$ is $\frac{3}{\sqrt{8\pi^2}} \approx \frac{1}{3}$. Alternatively, another value may be selected for $\beta_1$ based on an actual scenario. This is not limited in this application.

$SNR_1$ is an equivalent signal-to-noise ratio of the first signal, and may be determined based on the first subcarrier quantity $M_1$, the first OFDM symbol quantity $L_1$, the first sample energy $E_1$, the noise power spectral density $N_0$ of the receiver (the first communication apparatus), and the path loss from the transmitter (the second communication apparatus) to the receiver (the first communication apparatus).

In a possible implementation, $SNR_1$ is obtained by using the following formula:

$$SNR_1 = M_1 L_1 \frac{(T_{CP} + T_{IFFT})}{T_{IFFT}} \frac{E_1}{N_0} \rho \qquad (14)$$

$T_{CP}$ is a time length of a cyclic prefix (cyclic prefix, CP), $T_{IFFT}$ is a length of an OFDM symbol that does not include a CP, $N_0$ is the noise power spectral density of the receiver (for example, the first communication apparatus), and $\rho$ is a gain coefficient corresponding to the path loss (for example, for PL = 10 dB, $\rho = 0.1$). When the OFDM symbol has no cyclic prefix, that is, when $T_{CP} = 0$, $SNR_1$ is obtained by using the following formula:

$$SNR_1 = \frac{M_1 L_1 E_1}{N_0} \rho \qquad (15)$$

The third condition may meet the precision corresponding to the first signal, so that the ranging of the second signal is unambiguous. In the third condition, the maximum unambiguous range of the second signal is determined by a radio frequency carrier center frequency, the radio frequency carrier center frequency may be a value agreed on in a protocol, the noise power spectral density of the first communication apparatus is determined by a hardware circuit of the first communication apparatus, and the path loss may be obtained through measurement. Therefore, on a basis that the noise power spectral density, the path loss, and the maximum unambiguous range of the second signal are known, determining a group of first subcarrier quantity M1, a first OFDM symbol quantity L1, and a first transmit power E1 that meet a third condition.

The first signal whose transmission parameters meet the first condition and the third condition is used to perform ranging, so that a range within the targeted ranging coverage is unambiguous, and precision corresponding to the second signal meets that there is no phase ambiguity. Therefore, this solution may be used for initial ranging in a scenario of continuous ranging. On a basis of the initial ranging, the ranging based on the second signal may meet the targeted ranging precision, and may be used for continuous ranging of the target.

2. Second transmission parameter set of the second signal

The second transmission parameter set may include one or more of the following parameters: a second subcarrier quantity $M_2$ corresponding to the second signal, a second subcarrier spacing quantity $K_2$ corresponding to the second signal, a second orthogonal frequency division multiplexing OFDM symbol quantity $L_2$ corresponding to the second signal, and second sample energy $E_2$ corresponding to the second signal, where $M_2$, $K_2$, and $L_2$ are positive integers, and $E_2$ is greater than or equal to 0.

A parameter in the second transmission parameter set meets the second condition, and the second condition is related to the targeted ranging precision. Specifically, the second subcarrier quantity, the second OFDM symbol quantity, and the second sample energy that correspond to the second signal meet the second condition related to the targeted ranging precision, so that the phase ranging based on the second signal meets a requirement of the targeted ranging precision.

As described above, in phase ranging, ranging precision is related to a frequency of a radio frequency signal and a signal-to-noise ratio, where an equivalent signal-to-noise ratio of the signal is determined based on a subcarrier quantity, an OFDM symbol quantity, and sample energy of the signal, a noise power spectral density of a receiver, and a path loss from the transmitter to the receiver. Therefore, the second subcarrier quantity $M_2$, the second OFDM symbol quantity $L_2$, and the second sample energy $E_2$ in the second transmission parameter may be determined based on the targeted ranging precision, the noise power spectral density of the receiver, and the path loss from the transmitter to the receiver.

The targeted ranging precision may be predefined, or may be ranging precision predefined in a protocol or a standard. For example, one or more targeted ranging precisions may be defined in a protocol or a standard, and different transmission parameter sets may be determined for different targeted ranging precisions. For example, the targeted ranging precision may be 100 m, 50 m, 30 m, 20 m, 10 m, 5 m, 3 m, 2 m, 1 m, 50 cm, 30 cm, 20 cm, 10 cm, 5 cm, 3 cm, 2 cm, 1 cm, or the like.

In a possible implementation, the parameter in the second transmission parameter set meets the second condition, and the second condition is:

$$\delta \geq \frac{\beta_2 c}{f_c \sqrt{SNR_2}} \qquad (16)$$

$\delta$ is the targeted ranging precision, $SNR_2$ is an equivalent signal-to-noise ratio of the second signal, $f_c$ is the radio frequency carrier center frequency, $c$ is the signal propagation speed, and $\beta_2$ is a second correction parameter.

$\beta_2$ is a constant greater than 0, and is also referred to as a correction constant, and a typical value of $\beta_2$ is $\sqrt{2}$. Alternatively, another value may be selected for $\beta_2$ based on an actual scenario. This is not limited in this application.

$SNR_2$ may be determined based on the subcarrier quantity $M_2$ of the second signal, the OFDM symbol quantity $L_2$ of the second signal, the sample energy $E_2$ of the second signal, the noise power spectral density $N_0$ of the receiver (the first communication apparatus), and the path loss from the transmitter to the receiver.

In a possible implementation, $SNR_2$ is obtained by using the following formula:

$$SNR_2 = M_2 L_2 \frac{(T_{CP} + T_{IFFT})}{T_{IFFT}} \frac{E_2}{N_0} \rho \qquad (17)$$

$T_{CP}$ is a time length of a CP, $T_{IFFT}$ is a length of an OFDM symbol that does not include a CP, $N_0$ is the noise power spectral density of the receiver (for example, the first communication apparatus), and $\rho$ is a linear gain coefficient corresponding to the path loss (for example, for PL = 10 dB, $\rho$ = 0.1). When the OFDM symbol has no cyclic prefix, that is, when $T_{CP}$ = 0, $SNR_1$ is obtained by using the following formula:

$$SNR_2 = \frac{M_2 L_2 E_2}{N_0} \rho \qquad (18)$$

$T_{CP}$ and $T_{IFFT}$ in the foregoing formula (14) and formula (17) are determined according to system settings. For example, the NR protocol defines five system parameters. In a system parameter 0, a subcarrier spacing is 15 kHz, $T_{CP}$ is 4.69 $\mu$s, and $T_{IFFT}$ is 66.67 $\mu$s. In a system parameter 1, a subcarrier spacing is 30 kHz, $T_{CP}$ is 2.34 $\mu$s, and $T_{IFFT}$ is

33.33 μs. $T_{CP}$ and $T_{IFFT}$ may alternatively be values in a system parameter in a future evolved communication system. This is not limited herein.

The formulas described in this application are merely examples for expression, and another equivalent formula may be obtained through deformation of these formulas. Meeting the equivalent formula is also equivalent to meeting the formula in this application.

In a possible implementation, $L_2 = L - L_1$ is taken, where L is a length of a sensing signal including the first signal and the second signal. In other words, in a sensing period, the second signal is sent when the first signal is not sent, the first signal and the second signal are consecutive in time domain, and there is no interrupt in OFDM symbols of the first signal and the second signal. After the initial ranging based on the first signal is performed, continuous ranging may be immediately performed based on the second signal, thereby reducing a ranging error caused by signal discontinuity.

In a possible implementation, when the second signal is a non-single-carrier signal, the second subcarrier spacing quantity $K_2$ corresponding to the second signal is less than the first subcarrier spacing quantity $K_1$ corresponding to the first signal, that is, a subcarrier density corresponding to the second signal is greater than a subcarrier density corresponding to the first signal.

The second subcarrier quantity $M_2$ corresponding to the second signal is less than the first subcarrier quantity $M_1$ corresponding to the first signal. When the second subcarrier spacing quantity $K_2$ corresponding to the second signal is less than the first subcarrier spacing quantity $K_1$ corresponding to the first signal, bandwidth occupied by the second signal is less than bandwidth occupied by the first signal. Therefore, resource overheads during continuous ranging can be reduced.

In a possible implementation, the second OFDM symbol quantity $L_2$ corresponding to the second signal is greater than or equal to the first OFDM symbol quantity $L_1$ corresponding to the first signal. Time duration of the second signal in time domain is longer than time duration of the first signal in time domain, which is conducive to continuous ranging on a target.

In a possible implementation, transmit power $E_2$ corresponding to the second signal is less than or equal to transmit power $E_1$ corresponding to the first signal. Using low power for the second signal can reduce resource overheads during continuous ranging.

The following uses an example to describe possible values of the parameters in the first transmission parameter set of the first signal and the second transmission parameter set of the second signal in this embodiment of this application.

In a possible implementation, the first OFDM symbol quantity $L_1$ corresponding to the first signal may be 1 to 14 symbols; a minimum second OFDM symbol quantity $L_1$ corresponding to the second signal may be 1, and a maximum second OFDM symbol quantity may be the sensing period minus the OFDM symbol quantity of the first signal.

In a possible implementation, a minimum subcarrier quantity $M_1$ corresponding to the first signal is 2, and a maximum subcarrier quantity $M_1$ is limited by configured bandwidth. The minimum subcarrier quantity being 2 can implement multi-carrier phase ranging that is based on the first signal, and can meet a larger targeted ranging coverage compared with single-carrier phase ranging.

In a possible implementation, a minimum subcarrier quantity $M_2$ corresponding to the second signal is 1, and a maximum subcarrier quantity $M_2$ is limited by configured bandwidth. When the subcarrier quantity $M_2$ of the second signal is 1, that is, the second signal is a single-carrier signal, on a basis of implementing initial ranging by using the first signal, continuous targeted ranging that meets a precision requirement can also be implemented by using the single-carrier signal. In addition, when a single carrier is used, power for sending the second signal is centralized on one carrier, thereby reducing signal processing complexity.

In a possible implementation, the subcarrier spacing quantity $K_2$ of the second signal is 1. When the second signal is a single-carrier signal, the subcarrier spacing quantity $K_2$ does not exist in the second transmission parameter set, or the subcarrier spacing quantity $K_2$ is an invalid value.

In a possible implementation, in a scenario in which an active target is sensed, when the subcarrier spacing $\Delta f$ is $2^{\mu} \times 15$ kHz ($\mu = 0, 1, 2, 3, 4...$), a value range of the subcarrier spacing quantity $K_1$ corresponding to the first signal may be $2^{(-\mu)} \times 10 - 2^{(-\mu)} \times 20000$. For different targeted ranging coverages D, the subcarrier spacing quantity $K_1$ corresponding to the first signal may be shown in Table 1. For example, when the subcarrier spacing is 15 kHz ($\mu = 0$), and the targeted ranging coverage is 2000 m, the subcarrier spacing quantity corresponding to the first signal is 10. In this case, resource utilization is highest on a basis that the targeted ranging coverage is met. Optionally, the subcarrier spacing quantity may also be less than 10. When a value of the subcarrier spacing quantity in Table 1 is not an integer, $K_1$ should be a positive integer not greater than the value.

**Table 1 Possible values of the subcarrier spacing quantity K$_1$ when the subcarrier spacing is 2^$\mu$×15 kHz**

| Targeted ranging coverage (m) | Subcarrier spacing quantity K1 |
|---|---|
| 2000 | 2^(-$\mu$)×10 |
| 1000 | 2^(-$\mu$)×20 |
| 500 | 2^(-$\mu$)×40 |
| 400 | 2^(-$\mu$)×50 |
| 200 | 2^(-$\mu$)×100 |
| 100 | 2^(-$\mu$)×200 |
| 50 | 2^(-$\mu$)×400 |
| 20 | 2^(-$\mu$)×1000 |
| 10 | 2^(-$\mu$)×2000 |
| 5 | 2^(-$\mu$)×4000 |
| 2 | 2^(-$\mu$)×10000 |
| 1 | 2^(-$\mu$)×20000 |

As shown in Table 1, in a common ranging coverage (10 m to 1 km) and a 15 kHz subcarrier spacing configuration, a corresponding subcarrier spacing quantity is 20 to 2000. However, currently, comb structure spacing ranges of the PRS and the SRS are only {2, 4, 6, 12} and {2, 4, 8}. This excessively large maximum unambiguous range caused by such high-density frequency domain distribution does not match an actual application scenario, but increases unnecessary frequency domain resource overheads. The first signal in this embodiment of this application can reduce frequency domain resource overheads while meeting the targeted ranging coverage.

FIG. 11a to FIG. 11c are schematic diagrams of time-frequency resource distribution of a PRS and an SRS in NR and a sensing signal respectively in this application.

FIG. 11a is a schematic diagram of time-frequency resource distribution of a first signal and a second signal according to an embodiment of this application. As shown in FIG. 11a, in time domain, a sensing signal period is four slots, and each sensing period includes a first signal and a second signal. The first signal exists in the 1$^{st}$ slot of the sensing period, and the second signal exists in the last three slots of the sensing period. A part without padding in the figure may carry data or another reference signal, or may be left empty. In frequency domain, a subcarrier spacing quantity of the first signal is 4, that is, there is one subcarrier carrying the first signal in every four subcarriers. The first signal is distributed in an entire bandwidth allocated to the sensing signal in frequency domain, the second signal occupies a part of the bandwidth, and a quantity of subcarriers that carry the second signal is less than a quantity of subcarriers that carry the first signal.

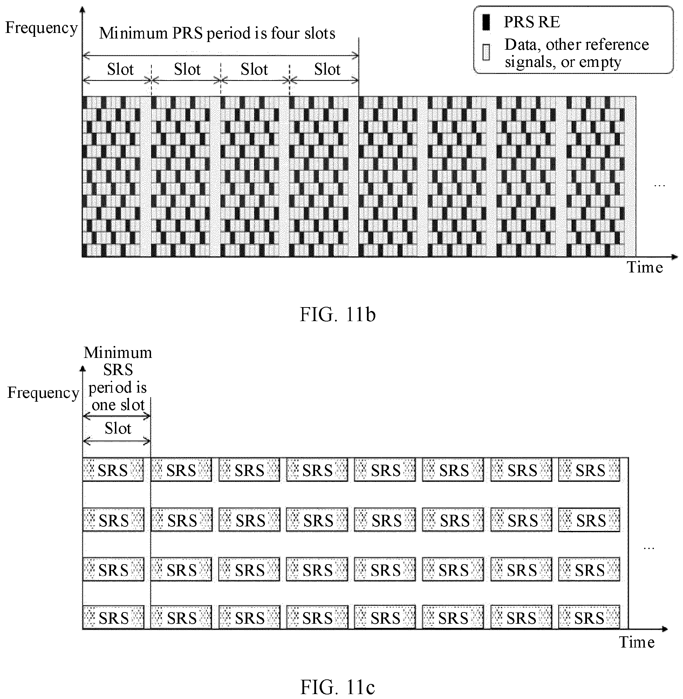

For comparison, FIG. 11b is a schematic diagram of typical time-frequency resource distribution of a PRS in NR. In time domain, a PRS period is also four slots (a minimum of four slots). To achieve a continuous ranging effect similar to that in this embodiment of this application, if a PRS repetition factor is 4, the PRS is repeated four times in each period, that is, the PRS exists in each slot. Compared with the solutions in this application, the PRS does not exist continuously in time domain, because in an NR system, in a normal cyclic suffix (normal CP) mode, there are 14 OFDM symbols in one slot, and the PRS exists in a maximum of 12 consecutive symbols. This causes a phenomenon that the PRS is discontinuous in time. In frequency domain, the PRS occupies, at an interval of 4 in a comb structure, an entire bandwidth allocated to the PRS. Because a PRS configuration is the same in a period, the PRS continuously occupies the entire bandwidth allocated to the PRS in the entire period.

For comparison, FIG. 11c is a schematic diagram of typical time-frequency resource distribution of an SRS in NR. In FIG. 11c, a part with "SRS" represents that an SRS signal is carried, and an empty part may carry data or another reference signal, or may be left empty. In time domain, an SRS period is one slot. To achieve a continuous ranging effect similar to that in the foregoing embodiments of this application, an SRS needs to exist in each slot. In the solution in FIG. 11c, compared with the solutions in this application, the SRS does not exist continuously in time domain, because in a normal CP mode, there are 14 OFDM symbols in one slot, and the SRS exists in a maximum of 12 consecutive symbols. This causes a phenomenon that the SRS is discontinuous in time. In frequency domain, a spacing of a comb structure of the SRS is 4, that is, one of every four subcarriers carries an SRS. Similar to the PRS, the SRS also covers an entire bandwidth allocated to the SRS.

By comparing FIG. 11a with FIG. 11b and FIG. 11c separately, it can be known that, to implement continuous ranging, the PRS and the SRS need to cover the entire allocated bandwidth in each slot, and there may be time discontinuity. However, in this application, the first signal uses a large bandwidth and high power for initial ranging, and the second signal uses a small bandwidth and low power for continuous ranging. The second signal does not occupy the entire bandwidth, and the second signal can implement continuous ranging of a target by occupying a small quantity of frequency domain resources. Other data, reference signals, and the like can be transmitted at an unoccupied resource location, thereby improving frequency domain resource utilization.

The following further analyzes transmission resources consumed in embodiments of this application and transmission resources consumed in the PRS solution and the SRS solution for achieving a similar ranging effect.

First, the PRS and the SRS are discontinuous in time domain. In a continuous ranging scenario of the target, the target may be lost, which has an obvious disadvantage compared with the solution in this application. In addition, in terms of resource utilization efficiency, this solution reduces more overheads. Resource utilization of the PRS is the same as that of the SRS, except that resource distribution of the PRS in frequency domain has an offset. Therefore, the following analyzes and compares overheads of the solution in this application and overheads of the SRS. Because four slots are a period shared by the PRS solution and this solution, overheads of the two solutions in the four slots are analyzed and compared. A quantity of REs in an entire periodicity is: 13 subcarriers × 14 OFDM symbols × 4 slots = 728. In this solution, a quantity of REs occupied by a sensing signal is: 4 subcarriers × 14 OFDM symbols × 1 slot + 2 subcarriers × 14 OFDM symbols × 3 slots = 140. In the SRS solution, a quantity of REs occupied by an SRS is: 4 subcarriers × 12 OFDM symbols × 4 slots = 192. Therefore, compared with this solution, the SRS solution uses about (192 - 140)/140 = 37% more resources.

Compared with the PRS and the SRS, the sensing signal provided in this embodiment of this application mainly reduces overheads by using the second signal. For ease of explanation, both the bandwidth and the period in the example are small. When the bandwidth and the period of the sensing signal are large in practice, the second stage may be longer than the first stage in this solution. In this case, compared with the PRS and the SRS, this solution may reduce more overheads.

In addition, when the existing PRS, SRS, P-PRS, and S-PRS implement positioning based on time difference measurement, correlation calculation of a large quantity of sampling points or complex parameter estimation needs to be performed. If phase ranging is performed by using these signals, because phases of time-domain complex waveforms of subcarriers of these signals are discontinuous (each subcarrier of an OFDM symbol in frequency domain corresponds to a complex sine wave in time domain), a receiver needs to detect a time point of phase discontinuity, and signal processing of the receiver is more complex. In addition, phase discontinuity may cause a decrease in phase detection precision.

For the foregoing problem, an embodiment of this application provides a method for making phases of a time-domain complex waveform corresponding to a subcarrier of a sensing signal continuous, to reduce processing complexity of a receiver, and improve phase detection precision, thereby improving ranging precision.

In a possible implementation, the method includes: performing phase compensation on an RE value of the first signal and/or the RE value of the second signal, so that the first signal and/or the second signal are/is phase continuous in adjacent OFDM symbols on a same subcarrier.

It is assumed that two REs on a same subcarrier on two adjacent OFDM symbols (numbered $l$ and $(l + 1)$ respectively, where $l$ is an integer greater than or equal to 0) including a sensing signal are RE-$l$ and RE-$(l+1)$ respectively. Phase compensation may be performed on RE-$(l + 1)$ based on a phase value of RE-$l$, so that phases of RE-$l$ and RE-$(l + 1)$ are continuous; or phase compensation may be performed on RE-$l$ based on a phase value of RE-$(l + 1)$, so that phases of RE-$l$ and RE-$(l + 1)$ are continuous.

For example, it is assumed that baseband frequency indexes of subcarriers on which RE-$l$ and RE-$(l+1)$ are located are q, values of RE-$l$ and RE-$(l + 1)$ are $x_l$ and $x_{l+1}$ respectively, a CP length of an OFDM symbol on which the two REs are located is $T_{CP}$, and a length of an OFDM symbol that does not include a CP is $T_{IFFT}$. To keep a phase of a time domain waveform corresponding to the RE-$(l + 1)$ after the CP is added and a phase of a time domain waveform corresponding to the RE-$l$ after the CP is added continuous, the following compensation may be performed on the value of the RE-$(l + 1)$ based on a current phase of the RE-$l$:

$$x_{l+1} = |x_{l+1}| \cdot e^{j\left[2\pi q \cdot \frac{T_{CP}}{T_{IFFT}} + \varphi(x_l)\right]} \qquad (19)$$

$|x_{l+1}|$ is an amplitude of $x_{l+1}$, and $\varphi(x_l)$ is a phase of $x_l$.

Alternatively, the following compensation may also be performed on the phase of RE-$l$ based on a current phase of RE-$(l+1)$:

$$x_l = |x_l| \cdot e^{j\left[-2\pi q \cdot \frac{T_{CP}}{T_{IFFT}} + \varphi(x_{l+1})\right]} \qquad (20)$$

$|x_l|$ is an amplitude of $x_l$, and $\varphi(x_{l+1})$ is a phase of $x_{l+1}$.

In a possible implementation, a first communication apparatus sends a first phase compensation indication to a second communication apparatus. Correspondingly, the second communication apparatus receives the first phase compensation indication sent by the first communication apparatus. In response to the first phase compensation instruction, the second communication apparatus performs phase compensation on the first signal and/or the second signal.

In a possible implementation, the second communication apparatus performs phase compensation on the first signal and/or the second signal, and sends a second phase compensation indication to the first communication apparatus, where the second phase compensation indication indicates that the first signal and/or the second signal are/is signals on which phase compensation is performed. The first communication apparatus selects, based on the second phase compensation indication, an appropriate signal processing method to process the first signal and the second signal. For example, different PLL types are used to process a signal with continuous phases and a signal with discontinuous phases.

Optionally, before transmitting the first signal and/or the second signal, the second communication apparatus performs phase compensation on the RE value of the first signal and/or the second signal. For example, phase compensation is sequentially performed on REs corresponding to consecutive OFDM symbols on a same subcarrier. The sequential compensation may be specifically: compensating values of the REs by using the formula (19) in ascending order of the OFDM symbol index $l$; or compensating values of the REs by using the formula (20) in descending order of the OFDM symbol index $l$.

In the foregoing method, phase compensation is performed by using values of REs corresponding to adjacent OFDM symbols on a subcarrier, so that the first signal and/or the second signal remain/remains phase continuity in adjacent OFDM symbols on a same subcarrier. A location or an index of a subcarrier carrying the first signal and/or the second signal is not limited in the method, and flexibility is high.

In another possible implementation, the method includes: selecting a subcarrier whose baseband frequency index meets a fourth condition, to transmit the first signal and/or the second signal, where the fourth condition is shown in the following formula (21):

$$y = \frac{n}{\Delta f \cdot T_{CP}} \ (n = 0, \pm 1, \pm 2, \dots) \qquad (21)$$

y is a baseband frequency index, $\Delta f$ is a subcarrier spacing, a CP length of an OFDM symbol is $T_{CP}$, and n is an integer.

Transmitting a specific value on subcarriers at specific locations may ensure that a phase of a time domain waveform corresponding to a sensing signal of these subcarriers is continuous in adjacent OFDM symbols. Specifically, when CP duration of the OFDM symbols is an integer multiple of a complex sine wave period corresponding to the subcarriers, it can be ensured that phases of the OFDM symbols including a CP are continuous.

In a possible implementation, for a selected subcarrier with a specific baseband frequency domain index, values of a plurality of consecutive REs corresponding to the first signal and/or the second signal at a frequency domain location of a same subcarrier are the same.

In a possible implementation, in a normal CP mode in NR, a baseband frequency index of a subcarrier corresponding to the first signal and/or the second signal is $y$ = 128n, (n = 0, $\pm$1, $\pm$2, ... ); or in an extended CP mode in NR, a baseband frequency index of a subcarrier corresponding to the first signal and/or the second signal is $y$ = 4n, (n = 0, $\pm$1, $\pm$2, ...).

In the foregoing method, for different configurations of subcarrier spacings and OFDM cyclic prefix lengths, subcarriers of a specific baseband frequency index are selected to carry the first signal and/or the second signal, so that the first signal and/or the second signal can remain phase continuity in adjacent OFDM symbols on a same subcarrier, and no operation such as phase compensation is required, thereby reducing complexity of a transmitter.

When a time domain complex waveform corresponding to the subcarrier of the first signal and/or the second signal is phase continuous across a plurality of OFDM symbols, a receiver does not need to detect a moment of phase discontinuity. Therefore, signal processing of the receiver is simple, and the signal phase continuity can ensure high phase detection precision, thereby improving ranging precision. In addition, a signal with continuous phases facilitates continuous ranging of the target. In a continuous ranging scenario, there may be two reasons of a phase change: a phase change caused by a movement of a target, and a phase change that is caused by phase discontinuity of a signal at some time. If a phase of a signal is continuous, a phase change directly reflects a movement of the target, thereby reducing complexity of signal processing.

The foregoing describes the transmission parameter sets of the first signal and the second signal and a process of performing sensing based on the sensing signal including the first signal and the second signal. The following describes an interaction process of configuring and using the sensing signal.

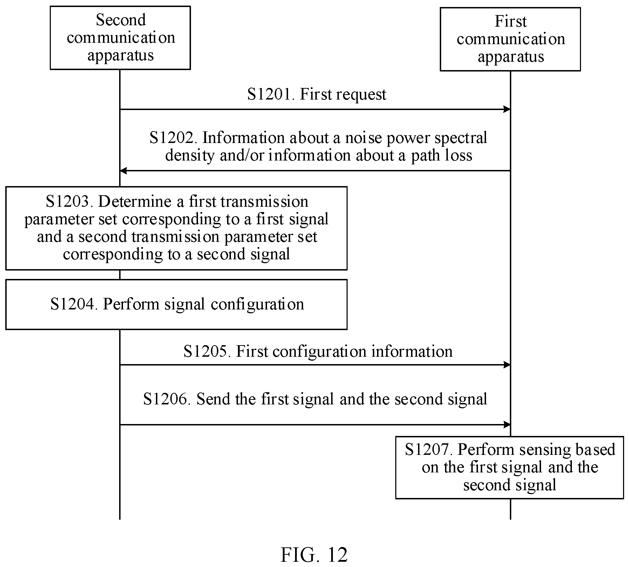

Before the first signal and the second signal are transmitted, the transmission parameter sets of the first signal and the second signal need to be determined, and signal configuration needs to be performed. The two steps may be performed by the first communication apparatus, or may be performed by the second communication apparatus, or may be performed by the first communication apparatus and the second communication apparatus respectively, or may be performed by the second communication apparatus and the first communication apparatus respectively. With reference to FIG. 12 to FIG. 15, the following describes four methods for determining the transmission parameter sets of the first signal and the second signal to perform signal configuration and sensing.

Refer to FIG. 12. FIG. 12 is a schematic interaction flowchart of a wireless sensing method according to an embodiment of this application. In the method shown in FIG. 12, a second communication apparatus determines transmission parameters of a first signal and a second signal, performs signal configuration, and sends a configuration result to a first communication apparatus.

S 1201. The second communication apparatus sends a first request to the first communication apparatus. Correspondingly, the first communication apparatus receives the first request sent by the second communication apparatus.

In a possible implementation, the first request is for requesting a noise power spectral density of the first communication apparatus and a path loss from the second communication apparatus to the first communication apparatus.

In a possible implementation, the second communication apparatus further sends a second request to the first communication apparatus. The first request is for requesting the noise power spectral density of the first communication apparatus, and the second request is for requesting the path loss from the second communication apparatus to the first communication apparatus. Alternatively, the first request is for requesting the path loss from the second communication apparatus to the first communication apparatus, and the second request is for requesting the noise power spectral density of the first communication apparatus.

As described above, in some possible implementations, ranging precision corresponding to the first signal and the second signal is related to the noise power spectral density of a receiver (the first communication apparatus) and the path loss from the second communication apparatus to the first communication apparatus. Therefore, when determining the transmission parameter sets of the first signal and the second signal, the second communication apparatus needs to learn the noise power spectral density of the first communication apparatus and the path loss from the second communication apparatus to the first communication apparatus.

In this step, the first request is for requesting the noise power spectral density of the first communication apparatus.

In a possible implementation, the first request and/or the second request may be sent by using RRC signaling. Specifically, a related information element (information element, IE) may be filled in the RRC signaling to indicate an amount (that is, the noise power spectral density and/or the path loss) that needs to be measured.

S 1202. The first communication apparatus sends information about the noise power spectral density and/or information about the path loss to the second communication apparatus. Correspondingly, the second communication apparatus receives the information about the noise power spectral density and/or the information about the path loss sent by the first communication apparatus.

In a possible implementation, the first communication apparatus performs noise power measurement based on the first request or the second request received in S1201, to obtain the noise power spectral density of the first communication apparatus, and sends the information about the noise power spectral density to the second communication apparatus.

In another possible implementation, the first communication apparatus stores the noise power spectral density of the first communication apparatus; and after receiving the first request, sends the information about the noise power spectral density stored in the first communication apparatus to the second communication apparatus.

Optionally, the information about the noise power spectral density may include an actual value or a quantized value of the noise power spectral density.

In a possible implementation, the first communication apparatus performs path loss measurement based on the first request or the second request received in S 1201, to obtain the path loss from the second communication apparatus to the first communication apparatus, and sends the information about the path loss to the first communication apparatus. Specifically, the second communication apparatus may obtain the path loss by measuring reference signal received power (reference signal received power, RSRP) of a reference signal sent by the first communication apparatus. Optionally, a reference signal for measuring the path loss may be carried in the first request or the second request, or may be carried in other signaling. This is not limited in this application. Optionally, the information about the path loss may include an actual value of the path loss or an offline gain coefficient corresponding to the path loss.

In a possible implementation, the information about the noise power spectral density and/or the information about the path loss may be sent by using RRC signaling.

S1203. The second communication apparatus determines a first transmission parameter set corresponding to the first signal and a second transmission parameter set corresponding to the second signal.

The second communication apparatus determines, based on a targeted ranging coverage, a first subcarrier spacing quantity corresponding to the first signal, further determines, based on the noise power spectral density of the first communication apparatus and the path loss from the second communication apparatus to the first communication apparatus, parameters such as a first subcarrier quantity, a first OFDM symbol quantity, and first sample energy in the transmission parameter set of the first signal, and determines parameters such as a second subcarrier quantity, a second OFDM symbol quantity, and second sample energy in the second transmission parameter set of the second signal based on targeted ranging precision, the noise power spectral density of the first communication apparatus, and the path loss from the second communication apparatus to the first communication apparatus.

In a possible implementation, the second communication apparatus selects, from a candidate transmission parameter set, the first transmission parameter set and/or the second transmission parameter set that meet/meets the targeted ranging coverage and the targeted ranging precision.

Optionally, the candidate parameter set includes a plurality of candidate first transmission parameter sets and/or a plurality of candidate second transmission parameter sets. The second communication apparatus selects, from the plurality of candidate first transmission parameter sets, a first transmission parameter set that meets the targeted ranging coverage, and selects, from the plurality of candidate second transmission parameter sets, a second transmission parameter set that meets the targeted ranging precision. Specifically, the second communication apparatus selects, from the plurality of candidate first transmission parameter sets, a first transmission parameter set that meets a first condition and/or a third condition. The second communication apparatus selects, from the plurality of candidate second transmission parameter sets, a second transmission parameter set that meets a second condition.

Optionally, the candidate parameter set includes a plurality of candidate subcarrier spacing quantity, a plurality of candidate subcarrier quantity, a plurality of candidate OFDM symbol quantity, and/or a plurality of candidate sample energy. The second communication apparatus selects, from the candidate parameter set, a subcarrier spacing quantity that meets the targeted ranging coverage as a parameter in the first transmission parameter set, and selects, from the candidate parameter set, a subcarrier quantity, an OFDM symbol quantity, and/or sample energy that meet targeted ranging precision as a parameter in the second transmission parameter set. Specifically, the second communication apparatus selects, from the candidate parameter set, a parameter that meets the first condition and/or the third condition as the parameter in the first transmission parameter set, and selects, from the candidate parameter set, a parameter that meets the second condition as the parameter in the second transmission parameter set.

The first transmission parameter set corresponding to the first signal and the second transmission parameter set corresponding to the second signal that are determined by the second communication apparatus may be the first transmission parameter set and the second transmission parameter set in the foregoing possible implementations. Details are not described herein again.

S 1204. The second communication apparatus performs signal configuration.

The second communication apparatus performs signal configuration based on the determined first transmission parameter set corresponding to the first signal and the determined second transmission parameter set corresponding to the second signal. Specifically, transmission resources of the first signal and the second signal are configured based on the first transmission parameter set and the second transmission parameter set. The transmission resources may be specifically locations of the first signal and the second signal in a time-frequency domain resource grid (resource grid).

The signal configuration further includes determining a value at the foregoing allocated location. The value may be a sequence, for example, a Gold sequence or a ZC sequence; may be a constant, for example, 1 or 0.5+0.5j; or may be a random sequence.

S1205. The second communication apparatus sends first configuration information to the first communication apparatus. Correspondingly, the first communication apparatus receives the first configuration information sent by the second communication apparatus.

The first configuration information indicates a result of signal configuration performed based on the first transmission parameter set and the second transmission parameter set. In a possible implementation, the first configuration information includes transmission resource information of the first signal and transmission resource information of the second signal that are determined based on the first transmission parameter set and the second transmission parameter set respectively.

In a possible implementation, the first configuration information is carried in radio resource control (radio resource control, RRC) signaling.

S1206. The second communication apparatus separately sends the first signal and the second signal to the first communication apparatus. Correspondingly, the first communication apparatus separately receives the first signal and the second signal.

In a possible implementation, the second communication apparatus sends the first signal and the second signal based on the first transmission parameter set and the second transmission parameter set respectively in one sensing period, and the first communication apparatus receives the first signal and the second signal based on the first transmission parameter set and the second transmission parameter set respectively in one sensing period.

That the second communication apparatus sends the first signal and the second signal based on the first transmission parameter set and the second transmission parameter set respectively in one sensing period may specifically include: The second communication apparatus sends, in one sensing period, the first signal and the second signal on transmission resources configured based on the first transmission parameter set and the second transmission parameter set.

That the first communication apparatus receives the first signal and the second signal based on the first transmission parameter set and the second transmission parameter set respectively in one sensing period may specifically include: The first communication apparatus receives, in one sensing period, the first signal and the second signal on the transmission resources configured based on the first transmission parameter set and the second transmission parameter set, where the transmission resources configured based on the first transmission parameter set and the second transmission parameter set are obtained based on the first configuration information received in S 1205.

Optionally, the second communication apparatus may further send the first signal and the second signal in each sensing period of a plurality of sensing periods. Correspondingly, the first communication apparatus may further receive the first signal and the second signal in each sensing period of the plurality of sensing periods.

For content of the sensing period in this step, refer to step S220. Details are not described herein again.

S 1207. The first communication apparatus performs sensing based on the first signal and the second signal, to obtain a sensing result.

This step is the same as S230. Details are not described herein again.

In the wireless sensing method shown in FIG. 12, the second communication apparatus determines the first transmission parameter set of the first signal and the second transmission parameter set of the second signal, performs signal configuration based on the determined first transmission parameter set and the determined second transmission parameter set, and sends a configuration result (the first configuration information) and sends the first signal and the second signal to the first communication apparatus, so that the first communication apparatus receives the first signal and the second signal based on the first configuration information determined based on the first transmission parameter set and the second transmission parameter set, and performs sensing based on the first signal and the second signal, to obtain the sensing result. According to the foregoing method, a transmission parameter of a sensing signal may be properly configured based on a specific signal-to-noise ratio in a scenario. In this way, in a stage of performing ranging based on the second signal, range ambiguity is avoided and resource utilization is improved.

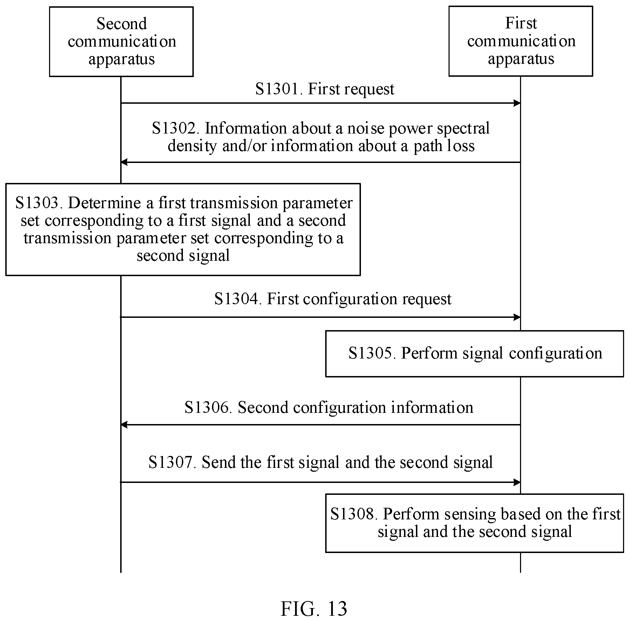

Refer to FIG. 13. FIG. 13 is a schematic interaction flowchart of another wireless sensing method according to an embodiment of this application. In the method shown in FIG. 13, a second communication apparatus determines transmission parameter sets of a first signal and a second signal, and sends a configuration request to a first communication apparatus. The first communication apparatus performs signal configuration and sends a configuration result to the second communication apparatus.

S 1301. The second communication apparatus sends a first request to the first communication apparatus. Correspondingly, the first communication apparatus receives the first request sent by the second communication apparatus.

S 1302. The first communication apparatus sends information about the noise power spectral density to the second communication apparatus. Correspondingly, the second communication apparatus receives the information about the noise power spectral density sent by the first communication apparatus.

S1303. The second communication apparatus determines a first transmission parameter set corresponding to the first signal and a second transmission parameter set corresponding to the second signal.

Steps S1301 to S1303 are the same as steps S1201 to S1203. Details are not described herein again.

S1304. The second communication apparatus sends a first configuration request to the first communication apparatus. Correspondingly, the first communication apparatus receives the first configuration request sent by the second communication apparatus.

The first configuration request is for requesting the first communication apparatus to perform signal configuration on the first signal and the second signal. The first configuration request includes information about the first transmission parameter set and information about the second transmission parameter set, so that the first communication apparatus performs signal configuration on the first signal and the second signal based on the first configuration request. The information about the first transmission parameter set and/or the information about the second transmission parameter set may be values of parameters in the first transmission parameter set and the second transmission parameter set. Alternatively, when the first transmission parameter set and/or the second transmission parameter set are/is parameters selected from a candidate parameter set, the information about the first transmission parameter set and/or the second transmission parameter set may be indexes of the first transmission parameter set and/or the second transmission parameter set, or may be indexes of parameters (for example, subcarrier quantities, subcarrier spacing quantities, OFDM symbol quantities, and sample energy) in the first transmission parameter set and/or the second transmission parameter set.

In a possible implementation, the first configuration request is carried in RRC signaling. The RRC signaling may be specifically an RRC request message.

S 1305. The first communication apparatus performs signal configuration.

The first communication apparatus performs signal configuration based on the received first configuration request. The first communication apparatus determines, based on the first configuration request, the first transmission parameter set corresponding to the first signal and the second transmission parameter set corresponding to the second signal, and performs signal configuration based on the determined first transmission parameter set corresponding to the first signal and the determined second transmission parameter set corresponding to the second signal. Specifically, the first communication apparatus configures transmission resources of the first signal and the second signal based on the first transmission parameter set and the second transmission parameter set. The transmission resources may be specifically locations of the first signal and the second signal in a time-frequency domain resource grid.

The signal configuration further includes determining values of the locations configured in the resource grid. The value may be a sequence, for example, a Gold sequence or a ZC sequence; may be a constant, for example, 1 or 0.5+0.5j; or may be a random sequence.

S1306. The first communication apparatus sends second configuration information to the second communication apparatus. Correspondingly, the second communication apparatus receives the second configuration information sent by the first communication apparatus.

The second configuration information indicates a result of signal configuration performed based on the first transmission parameter set and the second transmission parameter set. In a possible implementation, the second configuration information includes transmission resource information of the first signal and transmission resource information of the second signal that are determined based on the first transmission parameter set and the second transmission parameter set respectively.

In a possible implementation, the second configuration information is carried in RRC signaling. The RRC signaling may be specifically an RRC response message.

S1307. The second communication apparatus separately sends the first signal and the second signal to the first communication apparatus. Correspondingly, the first communication apparatus separately receives the first signal and the second signal.

In a possible implementation, the second communication apparatus sends the first signal and the second signal based on the first transmission parameter set and the second transmission parameter set respectively in one sensing period, and the first communication apparatus receives the first signal and the second signal based on the first transmission parameter set and the second transmission parameter set respectively in one sensing period.

That the second communication apparatus sends the first signal and the second signal based on the first transmission parameter set and the second transmission parameter set respectively in one sensing period may specifically include: The second communication apparatus sends, in one sensing period, the first signal and the second signal on the transmission resources configured based on the first transmission parameter set and the second transmission parameter set, where the transmission resources configured based on the first transmission parameter set and the second transmission parameter set are obtained based on the second configuration information received in S1306.

That the first communication apparatus receives the first signal and the second signal based on the first transmission parameter set and the second transmission parameter set respectively in one sensing period may specifically include: The first communication apparatus receives, in one sensing period, the first signal and the second signal on transmission resources configured based on the first transmission parameter set and the second transmission parameter set.

Optionally, the second communication apparatus may further send the first signal and the second signal in each sensing period of a plurality of sensing periods. Correspondingly, the first communication apparatus may further receive the first signal and the second signal in each sensing period of the plurality of sensing periods.

For content of the sensing period in this step, refer to step S220. Details are not described herein again.

S 1308. The first communication apparatus performs sensing based on the first signal and the second signal, to obtain a sensing result.

This step is the same as S230. Details are not described herein again.

In the wireless sensing method shown in FIG. 13, the second communication apparatus determines the first transmission parameter set of the first signal and the second transmission parameter set of the second signal, and sends the first configuration request including the information about the first transmission parameter set and the information about the second transmission parameter set to the first communication apparatus. The first communication apparatus performs signal configuration based on the first transmission parameter set and the second transmission parameter set, and sends a configuration result (the second configuration information) to the second communication apparatus. The second communication apparatus sends the first signal and the second signal based on the second configuration information, so that the first communication apparatus receives the first signal and the second signal on the transmission resources configured based on the first transmission parameter set and the second transmission parameter set, and performs sensing based on the first signal and the second signal, to obtain the sensing result. According to the foregoing method, a transmission parameter of a sensing signal may be properly configured based on a specific signal-to-noise ratio in a scenario. In this way, in a stage of performing ranging based on the second signal, range ambiguity is avoided and resource utilization is improved.

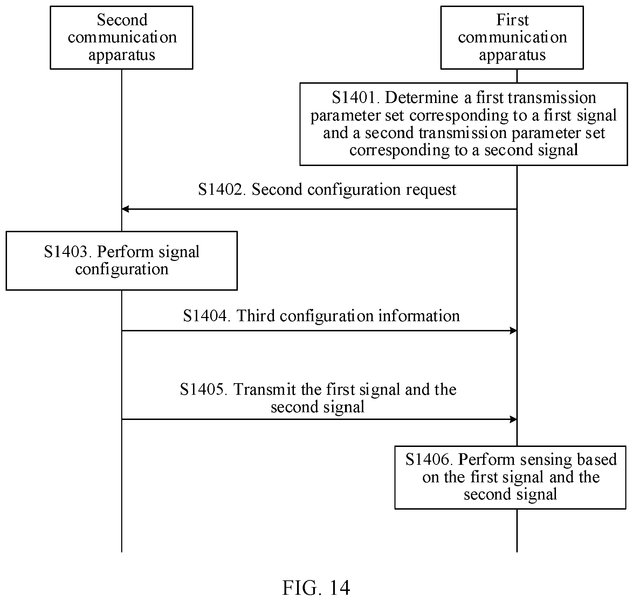

Refer to FIG. 14. FIG. 14 is a schematic interaction flowchart of another wireless sensing method according to an embodiment of this application. In the method shown in FIG. 14, a first communication apparatus determines transmission parameters of a first signal and a second signal, and sends a configuration request to a second communication apparatus. The second communication apparatus performs signal configuration and sends a configuration result to the first communication apparatus.

S 1401. The first communication apparatus determines a first transmission parameter set corresponding to the first signal and a second transmission parameter set corresponding to the second signal.

The first communication apparatus determines, based on a targeted ranging coverage, a first subcarrier spacing quantity corresponding to the first signal, further determines a transmission parameter of the first signal based on the noise power spectral density of the first communication apparatus, and determines the second transmission parameter set of the second signal based on targeted ranging precision and a noise power spectral density of the first communication apparatus.

In a possible implementation, the first communication apparatus selects, from a candidate transmission parameter set, the first transmission parameter set and/or the second transmission parameter set that meet/meets the targeted ranging coverage and the targeted ranging precision.

Optionally, the candidate parameter set includes a plurality of candidate first transmission parameter sets and/or a plurality of candidate second transmission parameter sets. The first communication apparatus selects, from the plurality of candidate first transmission parameter sets, a first transmission parameter set that meets the targeted ranging coverage, and selects, from the plurality of candidate second transmission parameter sets, a second transmission parameter set that meets the targeted ranging precision. Specifically, the first communication apparatus selects, from the plurality of candidate first transmission parameter sets, a first transmission parameter set that meets a first condition and/or a third condition. The second communication apparatus selects, from the plurality of candidate second transmission parameter sets, a second transmission parameter set that meets a second condition.

Optionally, the candidate parameter set includes a plurality of candidate subcarrier spacing quantity, a plurality of candidate subcarrier quantity, a plurality of candidate OFDM symbol quantity, and/or a plurality of candidate sample energy. The first communication apparatus selects, from the candidate parameter set, a subcarrier spacing quantity that meets the targeted ranging coverage as a parameter in the first transmission parameter set, and selects, from the candidate parameter set, a subcarrier quantity, an OFDM symbol quantity, and/or sample energy that meet targeted ranging precision as a parameter in the second transmission parameter set. Specifically, the first communication apparatus selects, from the candidate parameter set, a parameter that meets the first condition and/or the third condition as the parameter in the first transmission parameter set, and selects, from the candidate parameter set, a parameter that meets the second condition as the parameter in the second transmission parameter set.

The first transmission parameter set corresponding to the first signal and the second transmission parameter set corresponding to the second signal that are determined by the first communication apparatus may be the first transmission parameter set and the second transmission parameter set in the foregoing possible implementations. Details are not described herein again.

S1402. The first communication apparatus sends a second configuration request to the second communication apparatus. Correspondingly, the second communication apparatus receives the second configuration request sent by the first communication apparatus.

The second configuration request is for requesting the second communication apparatus to perform signal configuration on the first signal and the second signal. The second configuration request includes information about the first transmission parameter set and information about the second transmission parameter set, so that the second communication apparatus performs signal configuration on the first signal and the second signal based on the second configuration request. The information about the first transmission parameter set and/or the information about the second transmission parameter set may be values in the first transmission parameter set and the second transmission parameter set. Alternatively, when the first transmission parameter set and/or the second transmission parameter set are/is parameters selected from a candidate parameter set, the information about the first transmission parameter set and/or the second transmission parameter set may be indexes of the first transmission parameter set and/or the second transmission parameter set, or may be indexes of parameters (for example, subcarrier quantities, subcarrier spacing quantities, OFDM symbol quantities, and sample energy) in the first transmission parameter set and/or the second transmission parameter set.

In a possible implementation, the second configuration request is carried in RRC signaling. The RRC signaling may be specifically an RRC request message.

S 1403. The second communication apparatus performs signal configuration.

The second communication apparatus performs signal configuration based on the received second configuration request. Specifically, the second communication apparatus determines, based on the second configuration request, the first transmission parameter set corresponding to the first signal and the second transmission parameter set corresponding to the second signal, and performs signal configuration based on the determined first transmission parameter set corresponding to the first signal and the determined second transmission parameter set corresponding to the second signal. Specifically, transmission resources of the first signal and the second signal are configured based on the first transmission parameter set and the second transmission parameter set. The transmission resources may be specifically locations of the first signal and the second signal in a time-frequency domain resource grid.

The signal configuration further includes determining values of the locations configured in the resource grid. The value may be a sequence, for example, a Gold sequence or a ZC sequence; may be a constant, for example, 1 or 0.5+0.5j; or may be a random sequence.

S1404. The second communication apparatus sends third configuration information to the first communication apparatus. Correspondingly, the first communication apparatus receives the third configuration information sent by the second communication apparatus.

The third configuration information indicates a result of signal configuration performed based on the first transmission parameter set and the second transmission parameter set. In a possible implementation, the third configuration information includes transmission resource information of the first signal and transmission resource information of the second signal that are determined based on the first transmission parameter set and the second transmission parameter set respectively.

In a possible implementation, the third configuration information is carried in RRC signaling. The RRC signaling may be specifically an RRC response message.

S1405. The second communication apparatus separately sends the first signal and the second signal to the first communication apparatus. Correspondingly, the first communication apparatus separately receives the first signal and the second signal.

Step S 1405 is similar to step S 1206, and a difference lies in that the transmission resources used by the first communication apparatus to receive the first signal and the second signal are obtained based on the third configuration information in S 1404. For other related content, refer to S 1206. Details are not described herein again.

S 1406. The first communication apparatus performs sensing based on the first signal and the second signal, to obtain a sensing result.

This step is the same as S230. Details are not described herein again.

In the wireless sensing method shown in FIG. 14, the first communication apparatus determines the first transmission parameter set of the first signal and the second transmission parameter set of the second signal, and sends the second configuration request including the information about the first transmission parameter set and the information about the second transmission parameter set to the second communication apparatus. The second communication apparatus performs signal configuration based on the first transmission parameter set and the second transmission parameter set, and sends a configuration result (the third configuration information) and sends the first signal and the second signal to the first communication apparatus, so that the first communication apparatus receives the first signal and the second signal based on the third configuration information determined based on the first transmission parameter set and the second transmission parameter set, and performs sensing based on the first signal and the second signal, to obtain the sensing result. According to the foregoing method, a parameter of a sensing signal may be properly configured based on a specific signal-to-noise ratio in a scenario. In this way, in a stage of performing ranging based on the second signal, range ambiguity is avoided and resource utilization is improved.

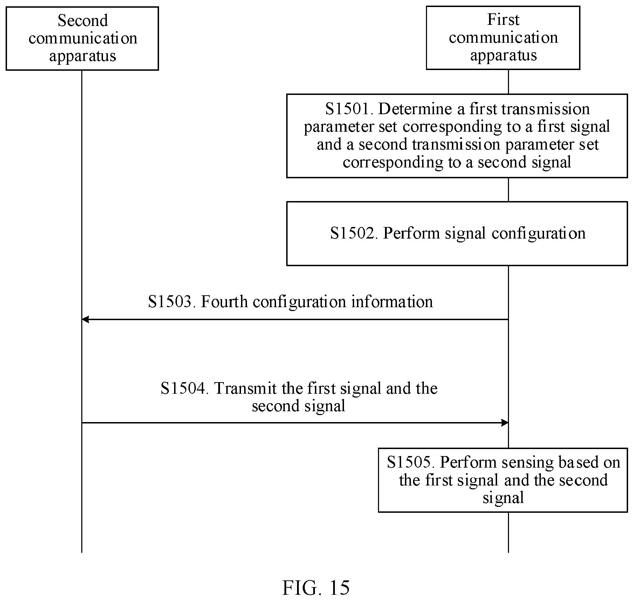

Refer to FIG. 15. FIG. 15 is a schematic interaction flowchart of another wireless sensing method according to an embodiment of this application. In the method shown in FIG. 15, a first communication apparatus determines transmission parameters of a first signal and a second signal, performs signal configuration, and sends a configuration result to a second communication apparatus.

S 1501. The first communication apparatus determines a first transmission parameter set corresponding to the first signal and a second transmission parameter set corresponding to the second signal.

This step is the same as step S1401. Details are not described herein again.

S 1502. The first communication apparatus performs signal configuration.

The first communication apparatus performs signal configuration based on the determined first transmission parameter set corresponding to the first signal and the determined second transmission parameter set corresponding to the second signal. Specifically, transmission resources of the first signal and the second signal are configured based on the first transmission parameter set and the second transmission parameter set. The transmission resources may be specifically locations of the first signal and the second signal in a time-frequency domain resource grid.

The signal configuration further includes determining values of the locations configured in the resource grid. The value may be a sequence, for example, a Gold sequence or a ZC sequence; may be a constant, for example, 1 or 0.5+0.5j; or may be a random sequence.

S1503. The first communication apparatus sends fourth configuration information to the second communication apparatus. Correspondingly, the second communication apparatus receives the fourth configuration information sent by the first communication apparatus.

The fourth configuration information indicates a result of signal configuration performed based on the first transmission parameter set and the second transmission parameter set. In a possible implementation, the fourth configuration information includes transmission resource information of the first signal and transmission resource information of the second signal that are determined based on the first transmission parameter set and the second transmission parameter set respectively.

In a possible implementation, the fourth configuration information is carried in RRC signaling.

S 1504. The second communication apparatus separately sends the first signal and the second signal to the first communication apparatus. Correspondingly, the first communication apparatus separately receives the first signal and the second signal.

This step is similar to S1307, and a difference lies in that the transmission resources used by the first communication apparatus to send the first signal and the second signal are obtained based on the fourth configuration information in S 1503. For other related content, refer to S 1307. Details are not described herein again.

S 1505. The first communication apparatus performs sensing based on the first signal and the second signal, to obtain a sensing result.

This step is the same as S230. Details are not described herein again.

In the wireless sensing method shown in FIG. 15, the first communication apparatus determines the first transmission parameter set of the first signal and the second transmission parameter set of the second signal, performs signal configuration based on the determined first transmission parameter set and the determined second transmission parameter set, and sends a configuration result (the fourth configuration information) to the second communication apparatus, and the second communication apparatus sends the first signal and the second signal based on the fourth configuration information, so that the first communication apparatus receives the first signal and the second signal on the transmission resources configured based on the first transmission parameter set and the second transmission parameter set, and performs sensing based on the first signal and the second signal, to obtain the sensing result. According to the foregoing method, a transmission parameter of a sensing signal may be properly configured based on a specific signal-to-noise ratio in a scenario. In this way, in a stage of performing ranging based on the second signal, range ambiguity is avoided and resource utilization is improved.

To implement the functions in the methods provided in embodiments of this application, the first communication apparatus and the second communication apparatus each may include a hardware structure and/or a software module. The foregoing functions are implemented in a form of a hardware structure, a software module, or a hardware structure and a software module. Whether a function in the foregoing functions is performed by using the hardware structure, the software module, or the hardware structure and the software module depends on particular applications and design constraints of the technical solutions.

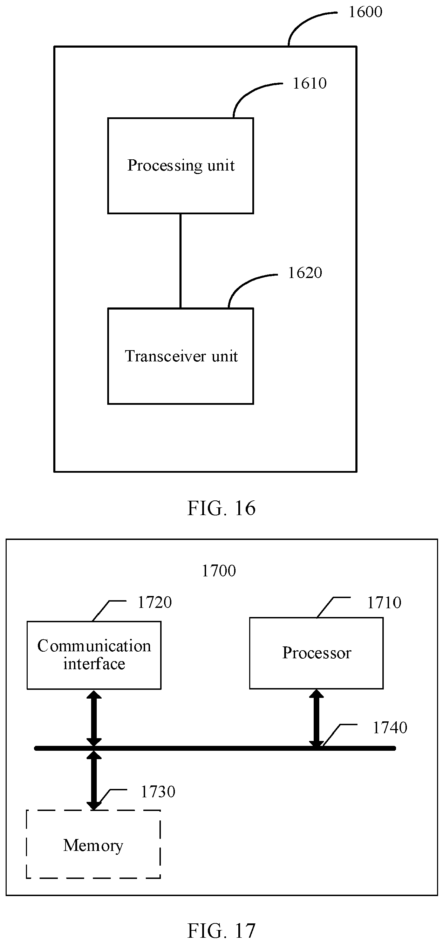

As shown in FIG. 16, an embodiment of this application provides a communication apparatus 1600. The communication apparatus 1600 may be a terminal or a network device, may be an apparatus in the terminal device or the network device, or may be an apparatus that can be used together with the terminal device or the network device. In a possible implementation, the communication apparatus 1600 may include modules or units that are in a one-to-one correspondence with the methods/operations/steps/actions performed by the first communication apparatus or the second communication apparatus in the foregoing method embodiments. The unit may be implemented by a hardware circuit, software, or a combination of a hardware circuit and software. In a possible implementation, the communication apparatus 1600 may include a processing unit 1610 and a transceiver unit 1620. The processing unit 1610 may be configured to invoke the transceiver unit 1620 to perform receiving and/or sending functions.

When the communication apparatus 1600 is configured to perform an operation performed by the first communication apparatus, the transceiver unit 1620 is configured to receive a first signal and a second signal based on a first transmission parameter set and a second transmission parameter set respectively, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The processing unit 1610 is configured to perform sensing based on the first signal and the second signal, to obtain a sensing result.

In a possible implementation, the processing unit 1610 is specifically configured to: perform sensing based on the first signal to obtain a first result, perform sensing based on the second signal to obtain a second result, and determine the sensing result based on the first result and the second result.

When the communication apparatus 1600 is configured to perform an operation performed by the second communication apparatus, the processing unit 1610 is configured to obtain a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The transceiver unit 1620 is configured to send the first signal and the second signal in one sensing period based on the first transmission parameter set and the second transmission parameter set, where the first signal and the second signal are used for sensing.

In a possible implementation, the processing unit 1610 is specifically configured to perform phase compensation on the second signal.

The transceiver unit 1620 is further configured to perform other receiving or sending steps or operations performed by the first communication apparatus or the second communication apparatus in the foregoing method embodiments. The processing unit 1610 may be further configured to perform other corresponding steps or operations performed by the first communication apparatus and the second communication apparatus in the foregoing method embodiments except receiving and sending. Details are not described herein again.

In this embodiment of this application, division into modules is an example, and is merely a logical function division. In actual implementation, another division manner may be used.

For example, when the communication apparatus 1600 is configured to perform an operation performed by the first communication apparatus, the communication apparatus may include a receiving unit and a sensing unit. The receiving unit is configured to receive, based on a first transmission parameter set and a second transmission parameter set respectively, a first signal and a second signal that are sent by a second communication apparatus. The sensing unit is configured to perform sensing based on the first signal and the second signal, to obtain a sensing result. The first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision. Optionally, the communication apparatus 1600 further includes a sending unit and a configuration unit. The receiving unit is further configured to receive a first configuration request. The configuration unit is configured to perform signal configuration in response to the first configuration request. The sending unit is configured to send second configuration information.

For example, when the communication apparatus 1600 is configured to perform an operation performed by the second communication apparatus, the communication apparatus may include an obtaining unit and a sending unit. The obtaining unit is configured to obtain a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The sending unit is configured to send the first signal and the second signal based on the first transmission parameter set and the second transmission parameter set, where the first signal and the second signal are used for sensing. Optionally, the communication apparatus 1600 further includes a receiving unit and a configuration unit. The receiving unit is configured to receive a second configuration request, the configuration unit is configured to perform signal configuration in response to the second configuration request, and the sending unit is further configured to send third configuration information.

In addition, functional modules or units in embodiments of this application may be integrated into one processor, or may exist alone physically, or two or more modules or units are integrated into one module or unit. The integrated module or unit may be implemented in a form of hardware, or may be implemented in a form of a software functional module. In a possible implementation, the processing unit 1610 may be a processor, and the transceiver unit 1620 may be a transceiver.

Refer to FIG. 17. An embodiment of this application further provides a communication apparatus 1700, configured to implement functions of the first communication apparatus and the second communication apparatus in the foregoing methods. The communication apparatus may be a terminal or a network device, may be an apparatus in the terminal or the network device, or may be an apparatus that can be used together with the terminal or the network device. The communication apparatus 1700 includes at least one processor 1710, and the communication apparatus 1700 may further include a communication interface 1720. In this embodiment of this application, the communication interface may be a transceiver, a circuit, a bus, a module, or a communication interface of another type, and is configured to communicate with another device through a transmission medium. For example, the communication interface 1720 is used by an apparatus in the communication apparatus 1700 to communicate with another device.

The processor 1710 may perform a function performed by the processing unit 1610 in the communication apparatus 1600. The communication interface 1720 may be configured to perform a function performed by the transceiver unit 1620 in the communication apparatus 1600.

When the communication apparatus 1700 is configured to perform an operation performed by the first communication apparatus, the communication interface 1720 is configured to receive a first signal and a second signal based on a first transmission parameter set and a second transmission parameter set respectively, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The processor 1710 is configured to perform sensing based on the first signal and the second signal, to obtain a sensing result.

When the communication apparatus 1700 is configured to perform an operation performed by the second communication apparatus, the processor 1710 is configured to obtain a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision. The communication interface 1720 is configured to output the first signal and the second signal based on the first transmission parameter set and the second transmission parameter set, where the first signal and the second signal are used for sensing.

The communication interface 1720 is further configured to perform other receiving or sending steps or operations performed by the first communication apparatus or the second communication apparatus in the foregoing method embodiments. The processor 1710 may be further configured to perform other corresponding steps or operations performed by the first communication apparatus and the second communication apparatus in the foregoing method embodiments except receiving and sending. Details are not described herein again.

The communication apparatus 1700 may further include at least one memory 1730, configured to store program instructions and/or data. The memory 1730 is coupled to the processor 1710. The coupling in this embodiment of this application may be an indirect coupling or a communication connection between apparatuses, units, or modules, and may be in an electrical form, a mechanical form, or another form for information exchange between the apparatuses, the units, or the modules. The processor 1720 may cooperate with the memory 1730. The processor 1710 may execute the computer program or instructions stored in the memory 1730. In a possible implementation, at least one of the at least one memory may be integrated with the processor. In another possible implementation, the memory 1730 is located outside the communication apparatus 1700.

A specific connection medium between the communication interface 1720, the processor 1710, and the memory 1730 is not limited in this embodiment of this application. In this embodiment of this application, the memory 1730, the processor 1710, and the communication interface 1720 are connected through a bus 1740 in FIG. 17. The bus is represented by using a thick line in FIG. 17. A manner of a connection between other components is merely an example for description, and is not limited thereto. The bus may be classified into an address bus, a data bus, a control bus, and the like. For ease of representation, only one thick line is used to represent the bus in FIG. 17, but this does not mean that there is only one bus or only one type of bus.

In a possible implementation, the communication apparatus 1700 may be a chip system. In this embodiment of this application, the chip system may include a chip, or may include a chip and another discrete component.

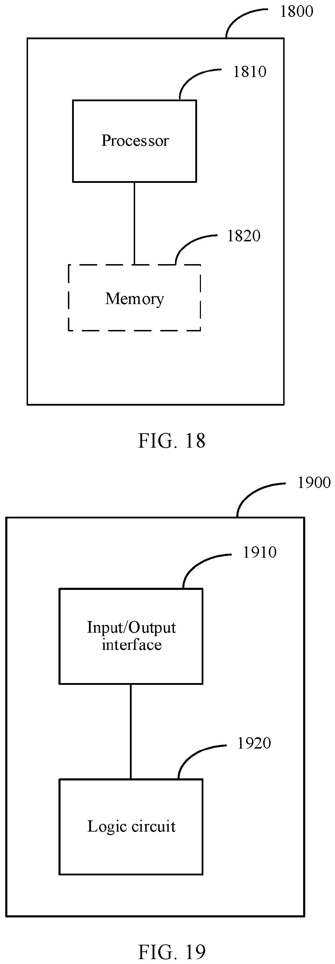

Refer to FIG. 18. An embodiment of this application further provides a communication apparatus 1800, configured to implement functions of the first communication apparatus and the second communication apparatus in the foregoing methods. The communication apparatus may be a terminal or a network device, may be an apparatus in the terminal or the network device, or may be an apparatus that can be used together with the terminal or the network device. The communication apparatus includes a processor 1810. The processor is configured to implement some or all functions of the first communication apparatus and/or the second communication apparatus.

In a possible implementation, when the communication apparatus 1800 is configured to implement a function of the first communication apparatus, the processor 1810 is configured to: receive a first signal and a second signal, where the first signal corresponds to a first transmission parameter set, and the second signal corresponds to a second transmission parameter set; and perform sensing based on the first signal and the second signal, to obtain a sensing result, where the first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision; and Optionally, the processor 1810 is specifically configured to: perform sensing based on the first signal to obtain a first result, perform sensing based on the second signal to obtain a second result, and determine the sensing result based on the first result and the second result.

In a possible implementation, when the communication apparatus 1800 is configured to implement a function of the second communication apparatus, the processor 1810 is configured to: obtain a first transmission parameter set and a second transmission parameter set, where the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision; and output the first signal and the second signal based on the first transmission parameter set and the second transmission parameter set, where the first signal and the second signal are used for sensing.

In a possible implementation, the processor 1810 executes instructions stored in a memory 1820, to implement functions implemented by the first communication apparatus and/or the second communication apparatus. Optionally, the communication apparatus further includes the memory 1820. Optionally, the processor 1810 and the memory 1820 are integrated together. Optionally, the memory 1820 is outside the communication apparatus 1800.

In embodiments of this application, the processor (for example, the processor 1710, or the processor 1810) may be one or more central processing units (Central Processing Unit, CPU). When the processor is one CPU, the CPU may be a single-core CPU, or may be a multi-core CPU. The processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory (for example, the memory 1730 or the memory 1820) may include but is not limited to a non-volatile memory such as a hard disk drive (hard disk drive, HDD) or a solid state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any other medium that can carry or store expected program code in a form of instructions or a data structure and that can be accessed by a computer, but is not limited thereto. Alternatively, the memory in embodiments of this application may be a circuit or any other apparatus that can implement a storage function, and is configured to store a computer program or instructions, and/or data.

Refer to FIG. 19. An embodiment of this application further provides an apparatus 1900, which may be configured to implement functions of the first communication apparatus and the second communication apparatus in the foregoing methods. The apparatus 1900 may be a communication apparatus or a chip in the communication apparatus. The communication apparatus includes:

at least one input/output interface 1910 and a logic circuit 1920. The input/output interface 1910 may be an input/output circuit. The logic circuit 1920 may be a signal processor, a chip, or another integrated circuit that can implement the method in this application.

The at least one input/output interface 1910 is configured to input or output a signal or data. For example, when the apparatus is the first communication apparatus, the input/output interface 1910 is configured to receive a first signal and a second signal. For example, when the apparatus is the second communication apparatus, the input/output interface 1910 is configured to output a first signal and a second signal.

The logic circuit 1920 is configured to perform a part or all of the steps in any one of the methods provided in embodiments of this application. For example, when the apparatus is the first communication apparatus, the apparatus is configured to perform the steps performed by the first communication apparatus in the possible implementations in the foregoing method embodiments. For example, the logic circuit 1920 is configured to perform sensing based on the first signal and the second signal to obtain a sensing result. When the apparatus is the second communication apparatus, the apparatus is configured to perform the steps performed by the second communication apparatus in the possible implementations in the foregoing method embodiments. For example, the logic circuit 1920 is configured to obtain a first transmission parameter set and a second transmission parameter set.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by another terminal or a network device to the terminal; or the chip in the terminal outputs information to another module (for example, a radio frequency module or an antenna) in the terminal, where the information is sent by the terminal to another terminal or a network device.

When the communication apparatus is a chip used in a network device, the chip in the network device implements functions of the network device in the foregoing method embodiments. The chip in the network device receives information from another module (for example, a radio frequency module or an antenna) in the network device, where the information is sent by a terminal or another network device to the network device; or the chip in the network device outputs information to another module (for example, a radio frequency module or an antenna) in the network device, where the information is sent by the network device to a terminal or another network device.

An embodiment of this application further provides a computer-readable storage medium. The computer-readable storage medium stores a computer program or instructions, and the computer program or the instructions are executed by a computer (for example, a processor), to implement some or all steps of any method performed by any apparatus in embodiments of this application.

An embodiment of this application further provides a computer program product including a computer program or a group of instructions. When the computer program product runs on a computer, some or all steps of any method in the foregoing aspects are performed.

This application further provides a chip or a chip system. The chip may include a processor. The chip may further include a memory (or a storage module) and/or a transceiver (or a communication module), or the chip is coupled to the memory (or the storage module) and/or the transceiver (or the communication module). The transceiver (or the communication module) may be configured to support the chip in wired and/or wireless communication. The memory (or the storage module) may be configured to store a program or a group of instructions. The processor invokes the program or the group of instructions to implement an operation performed by the terminal or the network device in any one of the foregoing method embodiments or the possible implementations of the foregoing method embodiments. The chip system may include the chip, or may include the chip and another discrete component, such as a memory (or a storage module) and/or a transceiver (or a communication module).

Based on a same concept as the foregoing method embodiments, this application further provides a communication system. The communication system may include the foregoing first communication apparatus and second communication apparatus. The communication system may be configured to implement an operation performed by the first communication apparatus or the second communication apparatus in any one of the foregoing method embodiments or the possible implementations of the foregoing method embodiments. For example, the communication system may have the structure shown in FIG. 1.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, an optical disc), a semiconductor medium (for example, a solid-state drive), or the like. In the foregoing embodiments, the description of each embodiment has respective focuses. For a part that is not described in detail in an embodiment, refer to related descriptions in other embodiments.

In the foregoing embodiments, the description of each embodiment has respective focuses. For a part that is not described in detail in an embodiment, refer to related descriptions in other embodiments.

When the apparatus provided in this application is implemented in the form of a software functional unit and sold or used as an independent product, the apparatus may be stored in a computer-readable storage medium. Based on such an understanding, the technical solutions in this application essentially, the part contributing to the conventional technologies, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application.

The foregoing description is merely some specific implementations of this application, but is not intended to limit the protection scope of this application. Any person skilled in the art may make changes and modifications to these embodiments within the technical scope disclosed in this application. Therefore, the following claims are intended to be construed as to cover the foregoing embodiments and to indicate changes and modifications falling within the scope of this application. Therefore, the protection scope of this application shall be subject to the protection scope of the claims.

## Claims

1. A wireless sensing method, comprising:

    receiving, by a first communication apparatus based on a first transmission parameter set and a second transmission parameter set respectively, a first signal and a second signal that are sent by a second communication apparatus, wherein

the first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision; and

performing, by the first communication apparatus, sensing based on the first signal and the second signal, to obtain a sensing result.

2. The method according to claim 1, wherein the performing sensing based on the first signal and the second signal comprises:
performing sensing based on the first signal to obtain a first result, performing sensing based on the second signal to obtain a second result, and determining the sensing result based on the first result and the second result.

3. The method according to claim 2, wherein the first result meets the targeted ranging coverage, and the second result meets the targeted ranging precision.

4. The method according to any one of claims 1 to 3, further comprising:
receiving, by the first communication apparatus, first configuration information, wherein the first configuration information indicates a result of signal configuration performed based on the first transmission parameter set and the second transmission parameter set.

5. The method according to any one of claims 1 to 3, further comprising:

receiving, by the first communication apparatus, a first configuration request, wherein the first configuration request comprises information about the first transmission parameter set and information about the second transmission parameter set;
performing signal configuration based on the first transmission parameter set and the second transmission parameter set; and
sending second configuration information, wherein the second configuration information indicates a result of signal configuration performed based on the first transmission parameter set and the second transmission parameter.

6. The method according to any one of claims 1 to 3, further comprising:

sending, by the first communication apparatus, a second configuration request, wherein the second configuration request comprises information about the first transmission parameter set and information about the second transmission parameter set; and
receiving third configuration information, wherein the third configuration information indicates a result of signal configuration performed based on the first transmission parameter set and the second transmission parameter set.

7. The method according to any one of claims 1 to 3, further comprising:

determining, by the first communication apparatus, the first transmission parameter set and the second transmission parameter set;
performing signal configuration based on the first transmission parameter set and the second transmission parameter set; and
sending fourth configuration information, wherein the fourth configuration information indicates a result of signal configuration performed based on the first transmission parameter set and the second transmission parameter set.

8. A wireless sensing method, comprising:

obtaining, by a second communication apparatus, a first transmission parameter set and a second transmission parameter set, wherein the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision; and

sending, by the second communication apparatus, the first signal and the second signal to a first communication apparatus based on the first transmission parameter set and the second transmission parameter set, wherein the first signal and the second signal are used for sensing.

**9.** The method according to claim 7, further comprising:
sending, by the second communication apparatus, first configuration information, wherein the first configuration information indicates a result of signal configuration performed based on the first transmission parameter set and the second transmission parameter set.

**10.** The method according to claim 7, further comprising:

sending, by the second communication apparatus, a first configuration request, wherein the first configuration request comprises information about the first transmission parameter set and information about the second transmission parameter set; and
receiving second configuration information, wherein the second configuration information indicates a result of signal configuration performed based on the first transmission parameter set and the second transmission parameter set.

**11.** The method according to claim 7, further comprising:

receiving, by the second communication apparatus, a second configuration request, wherein the second configuration request comprises information about the first transmission parameter set and information about the second transmission parameter set;
performing signal configuration in response to the second configuration request; and
sending third configuration information, wherein the third configuration information indicates a result of signal configuration performed based on the first transmission parameter set and the second transmission parameter set.

**12.** The method according to claim 7, further comprising:
receiving, by the second communication apparatus, fourth configuration information, wherein the fourth configuration information indicates a result of signal configuration performed based on the first transmission parameter set and the second transmission parameter set.

**13.** The method according to any one of claims 1 to 12, wherein
the first transmission parameter set comprises a first subcarrier spacing quantity corresponding to the first signal.

**14.** The method according to claim 13, wherein the first condition is:

$$D \le \frac{c}{\gamma K_1 \Delta f},$$

wherein
D is the targeted ranging coverage, $K_1$ is the first subcarrier spacing quantity, $\Delta f$ is a subcarrier spacing corresponding to the first signal, $c$ is a signal propagation speed, and $\gamma$ is a preset value greater than 0 and less than or equal to 2.

**15.** The method according to claim 14, wherein a value of the first subcarrier spacing quantity $K_1$ is a maximum integer that meets the first condition.

**16.** The method according to any one of claims 1 to 15, wherein

the first transmission parameter set comprises a first subcarrier quantity corresponding to the first signal, a first orthogonal frequency division multiplexing OFDM symbol quantity corresponding to the first signal, and first sample energy corresponding to the first signal; and
the first subcarrier quantity, the first OFDM symbol quantity, and the first sample energy meet a third condition, wherein the third condition is related to a maximum unambiguous range of the second signal.

**17.** The method according to claim 16, wherein the third condition is:

$$\frac{\beta_1 c}{B_{RMS}\sqrt{SNR_1}} \leq c/f_c,$$

wherein

$B_{RMS}$ is a root mean square bandwidth of the first signal, $SNR_1$ is an equivalent signal-to-noise ratio of the first signal, $f_c$ is a radio frequency carrier center frequency, c is the signal propagation speed, and $\beta_1$ is a first correction parameter; and

$SNR_1$ is determined based on the first subcarrier quantity, the first OFDM symbol quantity, the first sample energy, a noise power spectral density of the first communication apparatus, and a path loss from the second communication apparatus to the first communication apparatus.

18. The method according to any one of claims 1 to 17, wherein the second transmission parameter set comprises a second subcarrier quantity corresponding to the second signal, a second orthogonal frequency division multiplexing OFDM symbol quantity corresponding to the second signal, and second sample energy corresponding to the second signal; and

the second subcarrier quantity, the second OFDM symbol quantity, and the second sample energy meet the second condition.

19. The method according to claim 18, wherein the second condition is:

$$\delta \geq \frac{\beta_2 c}{f_c\sqrt{SNR_2}},$$

wherein

$\delta$ is the targeted sensing precision, $SNR_2$ is an equivalent signal-to-noise ratio of the second signal, $f_c$ is the radio frequency carrier center frequency, c is the signal propagation speed, and $\beta_2$ is a second correction parameter; and

$SNR_2$ is determined based on the second subcarrier quantity, the second OFDM symbol quantity, the second sample energy, the noise power spectral density of the first communication apparatus, and the path loss from the second communication apparatus to the first communication apparatus.

20. The method according to claim 1 or 2, wherein the first transmission parameter set and the second transmission parameter set meet one or more of the following relationships:

the first transmission parameter set comprises a first subcarrier spacing quantity corresponding to the first signal, the second transmission parameter set comprises a second subcarrier spacing quantity corresponding to the second signal, and the second subcarrier spacing quantity is less than or equal to the first subcarrier spacing quantity;

the first transmission parameter set comprises a first orthogonal frequency division multiplexing OFDM symbol quantity corresponding to the first signal, the second transmission parameter set comprises a second OFDM symbol quantity corresponding to the second signal, and the first OFDM symbol quantity is less than or equal to the second OFDM symbol quantity;

the first transmission parameter set comprises first sample energy corresponding to the first signal, the second transmission parameter set comprises second sample energy corresponding to the second signal, and the second sample energy is less than or equal to the first sample energy; or

the first transmission parameter set comprises a first subcarrier quantity corresponding to the first signal, the second transmission parameter set comprises a second subcarrier quantity corresponding to the second signal, and the second subcarrier quantity is less than the first subcarrier quantity.

21. The method according to any one of claims 1 to 20, wherein

the first signal or the second signal is phase continuous in adjacent OFDM symbols on a same subcarrier; or
the first signal and the second signal are phase continuous in adjacent OFDM symbols on a same subcarrier.

22. A first communication apparatus, comprising:

a receiving unit, configured to receive, based on a first transmission parameter set and a second transmission parameter set respectively, a first signal and a second signal that are sent by a second communication apparatus; and

a sensing unit, configured to perform sensing based on the first signal and the second signal, to obtain a sensing result, wherein

the first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision.

23. The apparatus according to claim 22, wherein the performing sensing based on the first signal and the second signal comprises:
performing sensing based on the first signal to obtain a first result, performing sensing based on the second signal to obtain a second result, and determining the sensing result based on the first result and the second result.

24. The apparatus according to claim 23, wherein the first result meets the targeted ranging coverage, and the second result meets the targeted ranging precision.

25. The apparatus according to any one of claims 22 to 24, wherein
the receiving unit is further configured to receive first configuration information, wherein the first configuration information indicates a result of signal configuration performed based on the first transmission parameter set and the second transmission parameter set.

26. The apparatus according to any one of claims 22 to 24, wherein

the receiving unit is further configured to: receive a first configuration request, wherein the first configuration request comprises information about the first transmission parameter set and information about the second transmission parameter set; and

perform signal configuration based on the first transmission parameter set and the second transmission parameter set; and the apparatus further comprises:

a sending unit, configured to send second configuration information, wherein the second configuration information indicates a result of signal configuration performed based on the first transmission parameter set and the second transmission parameter.

27. The apparatus according to any one of claims 22 to 24, wherein the apparatus further comprises:

a sending unit, configured to send a second configuration request, wherein the second configuration request comprises information about the first transmission parameter set and information about the second transmission parameter set; and

the receiving unit is further configured to receive third configuration information, wherein the third configuration information indicates a result of signal configuration performed based on the first transmission parameter set and the second transmission parameter set.

28. The apparatus according to any one of claims 22 to 24, wherein the apparatus further comprises a processing unit and a sending unit, wherein

the processing unit is configured to: determine the first transmission parameter set and the second transmission parameter set; and

perform signal configuration based on the first transmission parameter set and the second transmission parameter set; and

the sending unit is further configured to send fourth configuration information, wherein the fourth configuration information indicates a result of signal configuration performed based on the first transmission parameter set and the second transmission parameter set.

29. A first communication apparatus, comprising:

a transceiver, configured to receive, based on a first transmission parameter set and a second transmission parameter set respectively, a first signal and a second signal that are sent by a second communication apparatus; and

a processor, configured to perform sensing based on the first signal and the second signal, to obtain a sensing result, wherein

the first transmission parameter set corresponds to the first signal, at least one parameter in the first transmission parameter set meets a first condition, and the first condition is related to a targeted ranging coverage; and the second transmission parameter set corresponds to the second signal, at least one parameter in the second transmission parameter set meets a second condition, and the second condition is related to targeted sensing precision.

30. The apparatus according to claim 29, wherein the performing sensing based on the first signal and the second signal comprises:
performing sensing based on the first signal to obtain a first result, performing sensing based on the second signal to obtain a second result, and determining the sensing result based on the first result and the second result.

31. The apparatus according to claim 30, wherein the first result meets the targeted ranging coverage, and the second result meets the targeted ranging precision.

32. The apparatus according to any one of claims 29 to 31, wherein
the transceiver is further configured to receive first configuration information, wherein the first configuration information indicates a result of signal configuration performed based on the first transmission parameter set and the second transmission parameter set.

33. The apparatus according to any one of claims 29 to 31, wherein

the transceiver is further configured to: receive a first configuration request, wherein the first configuration request comprises information about the first transmission parameter set and information about the second transmission parameter set; and

perform signal configuration based on the first transmission parameter set and the second transmission parameter set; and

the transceiver is configured to send second configuration information, wherein the second configuration information indicates a result of signal configuration performed based on the first transmission parameter set and the second transmission parameter.

34. The apparatus according to any one of claims 29 to 31, wherein

the transceiver is configured to send a second configuration request, wherein the second configuration request comprises information about the first transmission parameter set and information about the second transmission parameter set; and

the transceiver is further configured to receive third configuration information, wherein the third configuration information indicates a result of signal configuration performed based on the first transmission parameter set and the second transmission parameter set.

35. The apparatus according to any one of claims 29 to 31, wherein

the processor is configured to: determine the first transmission parameter set and the second transmission parameter set; and

perform signal configuration based on the first transmission parameter set and the second transmission parameter set; and

the transceiver is further configured to send fourth configuration information, wherein the fourth configuration information indicates a result of signal configuration performed based on the first transmission parameter set and the second transmission parameter set.

36. A second communication apparatus, comprising:

an obtaining unit, configured to obtain a first transmission parameter set and a second transmission parameter set, wherein the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision; and

a sending unit, configured to send the first signal and the second signal to a first communication apparatus based on the first transmission parameter set and the second transmission parameter set, wherein the first signal and the second signal are used for sensing.

37. The apparatus according to claim 36, wherein
the sending unit is further configured to send first configuration information, wherein the first configuration information indicates a result of signal configuration performed based on the first transmission parameter set and the second transmission parameter set.

38. The apparatus according to claim 36, wherein

the sending unit is further configured to send a first configuration request, wherein the first configuration request comprises information about the first transmission parameter set and information about the second transmission parameter set; and the apparatus further comprises a receiving unit, wherein
the receiving unit is configured to receive second configuration information, wherein the second configuration information indicates a result of signal configuration performed based on the first transmission parameter set and the second transmission parameter.

39. The apparatus according to claim 36, wherein the apparatus further comprises a receiving unit, wherein

the receiving unit is further configured to receive a second configuration request, wherein the second configuration request comprises information about a first transmission parameter set and information about a second transmission parameter set; and the apparatus further comprises a processing unit, wherein
the processing unit is further configured to perform signal configuration in response to the second configuration request; and
the sending unit is further configured to send third configuration information, wherein the third configuration information indicates a result of signal configuration performed based on the first transmission parameter set and the second transmission parameter set.

40. The apparatus according to claim 36, wherein the apparatus further comprises a receiving unit, wherein
the receiving unit is further configured to receive fourth configuration information, wherein the fourth configuration information indicates a result of signal configuration performed based on the first transmission parameter set and the second transmission parameter set.

41. A second communication apparatus, comprising:

a processor, configured to obtain a first transmission parameter set and a second transmission parameter set, wherein the first transmission parameter set corresponds to a first signal, at least one parameter in the first transmission parameter set meets a first condition, and the first condition is related to a targeted ranging coverage; and the second transmission parameter set corresponds to a second signal, at least one parameter in the second transmission parameter set meets a second condition, and the second condition is related to targeted sensing precision; and
a transceiver, configured to send the first signal and the second signal to a first communication apparatus based on the first transmission parameter set and the second transmission parameter set, wherein the first signal and the second signal are used for sensing.

42. The apparatus according to claim 41, wherein
the transceiver is further configured to send first configuration information, wherein the first configuration information indicates a result of signal configuration performed based on the first transmission parameter set and the second transmission parameter set.

43. The apparatus according to claim 41, wherein

the transceiver is further configured to send a first configuration request, wherein the first configuration request comprises information about the first transmission parameter set and information about the second transmission parameter set; and

the transceiver is further configured to receive second configuration information, wherein the second configuration information indicates a result of signal configuration performed based on the first transmission parameter set and the second transmission parameter set.

**44.** The apparatus according to claim 41, wherein

the transceiver is further configured to receive a second configuration request, wherein the second configuration request comprises information about a first transmission parameter set and information about a second transmission parameter set;

the processor is further configured to perform signal configuration in response to the second configuration request; and

the transceiver is further configured to send third configuration information, wherein the third configuration information indicates a result of signal configuration performed based on the first transmission parameter set and the second transmission parameter set.

**45.** The apparatus according to claim 41, wherein
the transceiver is further configured to receive fourth configuration information, wherein the fourth configuration information indicates a result of signal configuration performed based on the first transmission parameter set and the second transmission parameter set.

**46.** The apparatus according to any one of claims 22 to 45, wherein
the first transmission parameter set comprises a first subcarrier spacing quantity corresponding to the first signal.

**47.** The apparatus according to claim 46, wherein the first condition is:

$$D \leq \frac{c}{\gamma K_1 \Delta f},$$

wherein

D is the targeted ranging coverage, $K_1$ is the first subcarrier spacing quantity, $\Delta f$ is a subcarrier spacing corresponding to the first signal, c is a signal propagation speed, and y is a preset value greater than 0 and less than or equal to 2.

**48.** The apparatus according to claim 47, wherein a value of the subcarrier spacing quantity $K_1$ of the first signal is a maximum integer that meets the first condition.

**49.** The apparatus according to any one of claims 22 to 48, wherein

the first transmission parameter set comprises a first subcarrier quantity corresponding to the first signal, a first orthogonal frequency division multiplexing OFDM symbol quantity corresponding to the first signal, and first sample energy corresponding to the first signal; and

the first subcarrier quantity, the first OFDM symbol quantity, and the first sample energy meet a third condition, wherein the third condition is related to a maximum unambiguous range of the second signal.

**50.** The apparatus according to claim 49, wherein the third condition is:

$$\frac{\beta_1 c}{B_{RMS}\sqrt{SNR_1}} \leq c/f_c,$$

wherein

$B_{RMS}$ is a root mean square bandwidth of the first signal, $SNR_1$ is an equivalent signal-to-noise ratio of the first signal, $f_c$ is a radio frequency carrier center frequency, c is the signal propagation speed, and $\beta_1$ is a first correction parameter; and

$SNR_1$ is determined based on the first subcarrier quantity, the first OFDM symbol quantity, the first sample energy, a noise power spectral density of the first communication apparatus, and a path loss from the second communication apparatus to the first communication apparatus.

51. The apparatus according to any one of claims 22 to 50, wherein the second transmission parameter set comprises a second subcarrier quantity corresponding to the second signal, a second orthogonal frequency division multiplexing OFDM symbol quantity corresponding to the second signal, and second sample energy corresponding to the second signal; and

the second subcarrier quantity, the second OFDM symbol quantity, and the second sample energy meet the second condition.

52. The apparatus according to claim 51, wherein the second condition is:

$$\delta \geq \frac{\beta_2 c}{f_c \sqrt{SNR_2}},$$

wherein

$\delta$ is the targeted sensing precision, $SNR_2$ is an equivalent signal-to-noise ratio of the second signal, $f_c$ is the radio frequency carrier center frequency, c is the signal propagation speed, and $\beta_2$ is a second correction parameter; and
$SNR_2$ is determined based on the second subcarrier quantity, the second OFDM symbol quantity, the second sample energy, the noise power spectral density of the first communication apparatus, and the path loss from the second communication apparatus to the first communication apparatus.

53. The apparatus according to any one of claims 22 to 52, wherein the first transmission parameter set and the second transmission parameter set meet one or more of the following relationships:

the first transmission parameter set comprises a first subcarrier spacing quantity corresponding to the first signal, the second transmission parameter set comprises a second subcarrier spacing quantity corresponding to the second signal, and the second subcarrier spacing quantity is less than or equal to the first subcarrier spacing quantity;
the first transmission parameter set comprises a first orthogonal frequency division multiplexing OFDM symbol quantity corresponding to the first signal, the second transmission parameter set comprises a second OFDM symbol quantity corresponding to the second signal, and the first OFDM symbol quantity is less than or equal to the second OFDM symbol quantity;
the first transmission parameter set comprises first sample energy corresponding to the first signal, the second transmission parameter set comprises second sample energy corresponding to the second signal, and the second sample energy is less than or equal to the first sample energy; or
the first transmission parameter set comprises a first subcarrier quantity corresponding to the first signal, the second transmission parameter set comprises a second subcarrier quantity corresponding to the second signal, and the second subcarrier quantity is less than the first subcarrier quantity.

54. The apparatus according to any one of claims 22 to 53, wherein

the first signal or the second signal is phase continuous in adjacent OFDM symbols on a same subcarrier; or
the first signal and the second signal are phase continuous in adjacent OFDM symbols on a same subcarrier.

55. A communication apparatus, comprising a processor, wherein the processor is coupled to a memory, the memory stores instructions, and the processor is configured to execute the instructions, so that the communication apparatus performs the method according to any one of claims 1 to 7 and 13 to 21, or the communication apparatus performs the method according to any one of claims 8 to 21.

56. A computer-readable storage medium, comprising instructions, wherein when the instructions are executed on a computer, the method according to any one of claims 1 to 7 and 13 to 21 is performed, or the method according to any one of claims 8 to 21 is performed.

57. A computer program product comprising instructions, wherein when the instructions are executed on a computer, the method according to any one of claims 1 to 7 and 13 to 21 is performed, or the method according to any one of claims 8 to 21 is performed.

58. A communication system, comprising the first communication apparatus according to any one of claims 22 to 35 and 46 to 54, and the second communication apparatus according to any one of claims 36 to 54.

Communication system 100

FIG. 1

Waveform

Time

FIG. 2

FIG. 3

$\Delta t_1 = t_2 - t_1$

$t_1$

$t_2$

Network device-1

Network device-2

$t_3$

Terminal

$\Delta t_2 = t_1 - t_3$

Network device-3

FIG. 4a

$\Delta t_1 = t_2 - t_1$

$t_1$

$t_2$

Network device-1

Network device-2

$t_3$

Terminal

$\Delta t_2 = t_1 - t_3$

Network device-3

FIG. 4b

$K_{comb}^{PRS} = 4$

$L_{PRS} = 12$

FIG. 5a

$K_{TC} = 4$

$N_{symb}^{SRS} = 12$

FIG. 5b

FIG. 6a

FIG. 6b

FIG. 7a

FIG. 7b

FIG. 8

FIG. 9

<u>Wireless sensing</u>
<u>method 200</u>

```
┌─────────────────┐                              ┌─────────────────┐
│     First       │                              │     Second      │
│  communication  │                              │  communication  │
│    apparatus    │                              │    apparatus    │
└─────────────────┘                              └─────────────────┘
```

S210. Determine a first transmission parameter set and a second transmission parameter set

S210. Determine a first transmission parameter set and a second transmission parameter set

S220. Transmit a first signal and a second signal based on the first transmission parameter set and the second transmission parameter set respectively

S230. Perform sensing based on the first signal and the second signal to obtain a sensing result

**FIG. 10**

**FIG. 11a**

FIG. 11b

FIG. 11c

```
┌─────────────────┐                              ┌─────────────────┐
│     Second      │                              │      First       │
│  communication  │                              │  communication  │
│   apparatus     │                              │   apparatus      │
└────────┬────────┘                              └────────┬────────┘
         │                                                │
         │         S1201. First request                  │
         │───────────────────────────────────────────────▶│
         │                                                │
         │  S1202. Information about a noise power spectral│
         │    density and/or information about a path loss │
         │◀───────────────────────────────────────────────│
┌────────┴───────────────────────────┐                   │
│  S1203. Determine a first transmission│                 │
│ parameter set corresponding to a first signal │         │
│ and a second transmission parameter set │               │
│  corresponding to a second signal    │                   │
└────────┬───────────────────────────┘                   │
┌────────┴───────────────────────────┐                   │
│ S1204. Perform signal configuration │                   │
└────────┬───────────────────────────┘                   │
         │                                                │
         │    S1205. First configuration information      │
         │───────────────────────────────────────────────▶│
         │                                                │
         │  S1206. Send the first signal and the second signal │
         │───────────────────────────────────────────────▶│
         │                                    ┌───────────┴──────────┐
         │                                    │ S1207. Perform sensing based │
         │                                    │  on the first signal and the │
         │                                    │       second signal          │
         │                                    └───────────┬──────────┘
         │                                                │
```

FIG. 12

FIG. 13

```
┌─────────────────┐                          ┌─────────────────┐
│     Second      │                          │      First      │
│  communication  │                          │  communication  │
│    apparatus    │                          │    apparatus    │
└─────────────────┘                          └─────────────────┘
```

S1401. Determine a first transmission parameter set corresponding to a first signal and a second transmission parameter set corresponding to a second signal

S1402. Second configuration request

S1403. Perform signal configuration

S1404. Third configuration information

S1405. Transmit the first signal and the second signal

S1406. Perform sensing based on the first signal and the second signal

FIG. 14

```
┌──────────────────┐                          ┌──────────────────┐
│      Second       │                          │       First       │
│   communication   │                          │   communication   │
│    apparatus      │                          │    apparatus      │
└──────────────────┘                          └──────────────────┘
         │                                              │
         │              ┌───────────────────────────────────────────┐
         │              │ S1501. Determine a first transmission      │
         │              │ parameter set corresponding to a first     │
         │              │ signal and a second transmission parameter │
         │              │ set corresponding to a second signal       │
         │              └───────────────────────────────────────────┘
         │                                              │
         │              ┌───────────────────────────────────────────┐
         │              │ S1502. Perform signal configuration        │
         │              └───────────────────────────────────────────┘
         │                                              │
         │    S1503. Fourth configuration information   │
         │<─────────────────────────────────────────────│
         │                                              │
         │   S1504. Transmit the first signal and the   │
         │              second signal                   │
         │─────────────────────────────────────────────>│
         │                                              │
         │              ┌───────────────────────────────────────────┐
         │              │ S1505. Perform sensing based on            │
         │              │ the first signal and the second            │
         │              │ signal                                     │
         │              └───────────────────────────────────────────┘
         │                                              │
```

FIG. 15

1600

1610

Processing unit

1620

Transceiver unit

FIG. 16

1700

1720

Communication interface

1710

Processor

1740

1730

Memory

FIG. 17

1800

1810

Processor

1820

Memory

FIG. 18

1900

1910

Input/Output
interface

1920

Logic circuit

FIG. 19

## INTERNATIONAL SEARCH REPORT

| International application No. |
|---|
| **PCT/CN2022/100350** |

**A. CLASSIFICATION OF SUBJECT MATTER**

H04W 24/08(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; JPTXT; 3GPP: 测距, 测速, 定位, 精度, 最大不模糊, 感知, 无线感知, 环境感知, 子载波, 参数, 配置, 满足, 符合, 条件, 要求, OFDM, subcarrier, sensing, wireless, environment, distance, range, measure, finding, parameter, configure, condition, satisfy

**C. DOCUMENTS CONSIDERED TO BE RELEVANT**

| Category* | Citation of document, with indication, where appropriate, of the relevant passages | Relevant to claim No. |
|---|---|---|
| X | CN 112205008 A (BEIJING XIAOMI MOBILE SOFTWARE CO., LTD.) 08 January 2021 (2021-01-08)<br>description, paragraphs [0144]-[0390], and figures 11-19 | 1-58 |
| A | CN 111736138 A (XIDIAN UNIVERSITY) 02 October 2020 (2020-10-02)<br>entire document | 1-58 |
| A | CN 104469931 A (ZTE CORP.) 25 March 2015 (2015-03-25)<br>entire document | 1-58 |
| A | CN 101257704 A (HUAWEI TECHNOLOGIES CO., LTD.) 03 September 2008 (2008-09-03)<br>entire document | 1-58 |
| A | US 2012032855 A1 (REEDE, I. et al.) 09 February 2012 (2012-02-09)<br>entire document | 1-58 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 August 2022** | **30 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/100350**

| Patent document cited in search report | | | Publication date (day/month/year) | Patent family member(s) | | | Publication date (day/month/year) |
|---|---|---|---|---|---|---|---|
| CN | 112205008 | A | 08 January 2021 | WO | 2022047708 | A1 | 10 March 2022 |
| CN | 111736138 | A | 02 October 2020 | | None | | |
| CN | 104469931 | A | 25 March 2015 | US | 2017318556 | A1 | 02 November 2017 |
| | | | | WO | 2016070674 | A1 | 12 May 2016 |
| CN | 101257704 | A | 03 September 2008 | CN | 101518118 | A | 26 August 2009 |
| | | | | WO | 2008104111 | A1 | 04 September 2008 |
| | | | | US | 2008205325 | A1 | 28 August 2008 |
| | | | | CN | 101257704 | B | 07 July 2010 |
| | | | | US | 8670408 | B2 | 11 March 2014 |
| US | 2012032855 | A1 | 09 February 2012 | CA | 2730845 | A1 | 11 September 2011 |
| | | | | US | 8711038 | B2 | 29 April 2014 |

Form PCT/ISA/210 (patent family annex) (January 2015)

**REFERENCES CITED IN THE DESCRIPTION**

**Patent documents cited in the description**

- CN 202110691276